# EUROPÄISCHE PATENTSCHRIFT

(11) **EP 3 868 009 B1**
(45) Veröffentlichungstag und Bekanntmachung des Hinweises auf die Patenterteilung: **30.03.2022**
(21) Anmeldenummer: 19817600.0
(22) Anmeldetag: 26.11.2019
(51) Int. Cl.: H02K 41/03

(54) **VORRICHTUNG UND VERFAHREN FÜR EINE PFADPLANUNG FÜR EINEN MOVER EINER ANTRIEBSVORRICHTUNG**
DEVICE AND METHOD FOR PATH PLANNING FOR A MOVER OF A DRIVE DEVICE
DISPOSITIF ET PROCÉDÉ DE PLANIFICATION DE TRAJECTOIRE POUR UN ÉLÉMENT DE DÉPLACEMENT D'UN DISPOSITIF D'ENTRAÎNEMENT

(30) Priorität: 26.11.2018 DE 102018129738
(43) Veröffentlichungstag der Anmeldung: 25.08.2021
(73) Patentinhaber: Beckhoff Automation GmbH, 33415 Verl (DE)
(72) Erfinder: WEBER, Tobias, 33332 Gütersloh (DE); NEUMANN, Klaus, 33330 Gütersloh (DE); WEDDEMANN, Alexander, 59558 Lippstadt (DE); PENNEKAMP, Hubertus, 33334 Gütersloh (DE); LUTHE, Thomas, 33415 Verl (DE); WIEDNER, Eva, 33161 Hövelhof (DE)
(74) Vertreter: Patentanwaltskanzlei WILHELM & BECK
(86) Internationale Anmeldenummer: PCT/EP2019/082536
(87) Internationale Veröffentlichungsnummer: WO 2020/109287

(56) Entgegenhaltungen:
- EP-A1- 3 095 739
- WO-A1-2018/176137
- BORTOFF S A: "Path planning for UAVs", AMERICAN CONTROL CONFERENCE, 2000. PROCEEDINGS OF THE 2000 JUNE 28-30, 2000, PISCATAWAY, NJ, USA,IEEE, Bd. 1, Nr. 6, 28. Juni 2000 (2000-06-28), Seiten 364-368, XP010518074, ISBN: 978-0-7803-5519-4
- KAVRAKI L E ET AL: "PROBABILISTIC ROADMAPS FOR PATH PLANNING IN HIGH-DIMENSIONAL CONFIGURATION SPACES", IEEE TRANSACTIONS ON ROBOTICS AND AUTOMATION, IEEE INC, NEW YORK, US, Bd. 12, Nr. 4, 1. August 1996 (1996-08-01) , Seiten 566-580, XP000640987, ISSN: 1042-296X, DOI: 10.1109/70.508439

## Beschreibung

Die Erfindung betrifft eine Vorrichtung und ein Verfahren für eine Pfadplanung für einen Mover einer Antriebsvorrichtung.

Planare Antriebssysteme können unter anderem in der Automatisierungstechnik, insbesondere der Fertigungstechnik, der Handhabungstechnik und der Verfahrenstechnik eingesetzt werden. Mittels planarer Antriebssysteme kann ein bewegliches Element, ein sogenannter Mover, einer Anlage einer Maschine in mindestens zwei linear unabhängigen Richtungen bewegt oder positioniert werden. Planare Antriebssysteme können einen permanenterregten elektromagnetischen Planarmotor mit einem planaren Stator und einem auf dem Stator in mindestens zwei Richtungen beweglichen Läufer, das heißt den Mover, umfassen.

Bei einem permanenterregten elektromagnetischen Planarmotor wird dadurch eine Antriebskraft auf den Mover ausgeübt, dass stromdurchflossene Leiter mit Antriebsmagneten einer Magnetanordnung magnetisch wechselwirken. Die Erfindung betrifft insbesondere Ausgestaltungen von planaren Antriebsvorrichtungen, bei denen die Antriebsmagneten eines elektrischen Planarmotors an dem Mover und die stromdurchflossenen Leiter des Planarmotors in einer ortsfest angeordneten Antriebsfläche angeordnet sind.

Aus der EP 3 095 739 A1 ist eine gattungsgemäße Vorrichtung und ein gattungsgemäßes Verfahren zum Antreiben wenigstens eines Movers auf einer Antriebsfläche bekannt, wobei Fahrwege in Form von Pfaden für die Mover berechnet werden. Dabei ist die Pfadplanung relativ aufwendig. Weiterer Stand der Technik ist aus BORTOFF s A: 11Path planning for UAVs 11 AMERICAN CONTROL CON FERENCE, 2000, PRO-CEEDI NGS OF THE 2000 JUNE 28-30, 2000, PISCATAWAY, NJ, USA.IEEE, Bd. 1. Nr. 6, 28. Juni 2000, Seiten 364-368, KAVRAKI L E ET AL: "PROBABILISTIC ROADMAPS FOR PATH PLANNING IN HIGH-DIMENSIONAL CONFIGURATION SPACES", IEEE TRANSACTIONS ON ROBOTICS AND AUTOMATION, IEEE INC, NEW YORK, US, Bd. 12, Nr. 4, 1. August 1996 (1996-08-01), Seiten 566-580 und der WO 2018/176137 A1 bekannt.

Aufgabe der vorliegenden Erfindung ist es, eine verbesserte Vorrichtung und ein verbessertes Verfahren für eine Pfadplanung eines Movers auf einer Antriebsvorrichtung bereitzustellen.

Die Aufgabe der Erfindung wird durch die Vorrichtung und das Verfahren und die Steuereinheit gemäß den unabhängigen Ansprüchen gelöst. Weiterbildungen sind jeweils in den abhängigen Ansprüchen angegeben.

Es wird eine Vorrichtung zum Antreiben wenigstens eines Movers auf einer Antriebsfläche vorgeschlagen. Der Mover weist wenigstens einen zweiten Magnetfelderzeuger, insbesondere einen Magneten auf. Die Antriebsfläche weist mehrere plattenförmige Sektoren auf. Die Sektoren weisen Magnetfelderzeuger auf, die zum Erzeugen von Magnetfeldern dienen. Es ist eine Steuereinheit vorgesehen, die mit den Sektoren verbunden ist. Die Steuereinheit ist ausgebildet, über eine entsprechende Steuerung einer Stromversorgung der Magnetfelderzeuger Magnetfelder in der Weise zu erzeugen, dass der Mover wenigstens in einer Richtung über die Antriebsfläche bewegbar ist. Zudem ist die Steuereinheit ausgebildet, eine Pfadplanung für einen Pfad auszuführen, entlang dem der Mover bewegt werden soll. Für die Pfadplanung wird von der Steuereinheit eine Rasterung der Antriebsfläche in Form eines Graphen mit Knoten und Kanten verwendet. Die Steuereinheit ermittelt anhand des Graphen einen Pfad für den Mover von einem Startpunkt zu einem Zielpunkt. Zudem ist die Steuereinheit ausgebildet, um die Magnetfelderzeuger in der Weise mit Strom anzusteuern, dass der Mover entlang des ermittelten Pfades über die Antriebsfläche bewegbar wird. Durch die Verwendung des Graphen mit Kanten und Knoten wird die Pfadplanung vereinfacht. Dies ermöglicht die Nutzung bereits bestehender effizienter Algorithmen. Für die Pfadplanung anhand des Graphen gibt es verschiedene Vorgehensweisen. Z.B. kann der Pfad wenigstens teilweise oder vollständig anhand der Kanten des Graphen geplant werden. Zudem können bei der Pfadplanung Gewichte von Kanten berücksichtigt werden, wobei z. B. die Summe der Gewichte der Kanten für den gesamten Pfad minimiert werden. In einer weiteren Ausführungsform muss der Pfad nicht exakt an den Kanten entlangführen. Der Pfad kann z.B. im Interesse eines besseren resultierenden Pfades von den Kanten und Knoten abweichen. Es kann in einem ersten Schritt ein Pfad entlang der Kanten geplant werden, wobei der Pfad in einem zweiten Schritt geglättet wird, um z.B. zu starke Richtungswechsel an den Knoten zu vermeiden. Weiterhin kann ein Hybridalgorithmus verwendet werden, der sich am Graphen orientiert, aber einen Pfad ermittelt, der nicht auf den Kanten und Knoten liegen muss.

Abhängig von der gewählten Ausführungsform muss der Pfad des Movers nicht präzise auf die Kanten des Graphen beschränkt sein. Beispielsweise können Abweichungen von den Kanten insbesondere im Bereich der Knoten zugelassen werden, um eine verbesserte Planung des Pfades zu ermöglichen.

Bei einer Weiterbildung der Vorrichtung ist wenigstens einer Kante, insbesondere wenigstens einem Teil der Kanten, eine Gewichtung zugeordnet. Die Gewichtung legt fest, wie vorteilhaft oder nachteilig ein Pfad über den Knoten oder die Kante für eine vorgegebene Optimierung ist. Die Gewichtung wird von der Steuereinheit bei der Pfadplanung berücksichtigt, um gemäß einer vorgegebenen Strategie einen optimierten Pfad für die Bewegung des Movers zu ermitteln. Beispielsweise kann eine hohe Gewichtung bei der Pfadplanung vermieden werden. Somit können Kanten, die sich für eine Pfadplanung besser eignen als andere Kanten mit einer entsprechenden hohen oder niedrigen Gewichtung versehen werden. Durch die Verwendung von Kanten mit Gewichtungen kann auf einfache Weise gemäß einer vorgegebenen Strategie ein Pfad eines Movers von einem Startpunkt zu einem Zielpunkt ermittelt werden. Die Strategie kann beispielsweise darin bestehen, Kanten mit großen oder kleinen Gewichtungen zu meiden. Zudem kann die Strategie der Pfadplanung darin bestehen, dass eine Summe der Gewichtungen der Kanten, die auf dem ermittelten Pfad des Movers liegen, einen vorgegebenen Grenzwert nicht überschreiten oder die Summe der Gewichtungen der Kanten des ermittelten Pfades einen minimalen Wert für die verschiedenen möglichen Pfade zwischen dem Startpunkt und dem Zielpunkt aufweist.

In einer Weiterbildung der Vorrichtung hängt die Gewichtung einer Kante von der Länge der Kante oder von einer maximalen Geschwindigkeit und/oder einer maximalen Beschleunigung des Movers ab. Je kürzer eine Kante ist, umso besser ist z.B. die Gewichtung der Kante. Je schneller ein Mover auf der Kante bewegt werden kann, umso besser ist z.B. die Gewichtung der Kante. Der Graph kann unterschiedlich lange Kanten aufweisen. Grundsätzlich kann es vorteilhaft sein, einen möglichst kurzen Pfad zwischen dem Startpunkt und dem Zielpunkt zu ermitteln. Somit ist es vorteilhaft, Kanten für die Planung des Pfades zu verwenden, die eine möglichst kurze Länge haben. Mit den möglichst kurzen Kanten kann ein möglichst kurzer Pfad vom Startpunkt bis zum Zielpunkt ermittelt werden. Weiterhin kann eine maximale Geschwindigkeit des Movers beim Befahren der Kante ein Parameter sein, der die Zeit beeinflusst, die der Mover benötigt, um vom Startpunkt zum Zielpunkt zu gelangen. Somit werden bei der Pfadplanung Kanten bevorzugt, die eine möglichst hohe Geschwindigkeit des Movers erlauben. Sowohl die Länge des Pfades als auch die Zeitdauer, die der Mover benötigt, um über den Pfad vom Startpunkt zum Zielpunkt zu gelangen, sind wesentliche Faktoren, die bei der Pfadplanung berücksichtigt werden sollten.

In einer Weiterbildung der Vorrichtung hängt die Gewichtung einer Kante von einer Temperatur des Sektors ab. Insbesondere kann die Gewichtung einer Kante von einer Temperatur eines Magnetfelderzeugers des Sektors abhängen. Bei der Bestromung des Magnetfelderzeugers wird Verlustwärme erzeugt, die den Sektor aufheizt. Zu hohe Temperaturen können sowohl der Magnetfelderzeuger als auch weitere Bauteile des Sektors negativ beeinflussen. Weiterhin kann es vorteilhaft sein, vorgegebene maximale Temperaturen im Sektor zu vermeiden. Somit kann es unter bestimmten Bedingungen vorteilhaft sein, nicht einen kürzesten Pfad oder einen schnellsten Pfad zu wählen, sondern bei der Pfadplanung Sektoren zu meiden, die bereits eine vorgegebene Temperatur überschritten haben oder bei denen die Gefahr besteht, dass bei einer weiteren Bestromung der Magnetfelderzeuger des Sektors eine Grenztemperatur überschritten wird. Bei einer Weiterbildung der Vorrichtung kann die Gewichtung von weiteren Parametern der Sektoren und/oder des Movers abhängen, die eine vorteilhafte Pfadplanung unterstützen. Beispielsweise kann die Gewichtung von einer Geschwindigkeit des Movers, einer maximal möglichen Beschleunigung des Movers oder einer Temperatur der Sektoren abhängen.

Die Steuereinheit ist ausgebildet, um bei der Pfadplanung einen Graphen zu verwenden, der in einem vorgegebenen Umfeld um die Position des Movers eine größere Dichte an Kanten und/oder eine größere Dichte an Knoten aufweist als in einem Gebiet außerhalb des vorgegebenen Umfeldes. Somit kann durch die Festlegung des Umfeldes die Genauigkeit des Graphen relativ zur Position des Movers mit unterschiedlichen Dichten an Kanten und/oder Knoten festgelegt werden. In einer einfachen Ausführung kann das Umfeld in Form einer Kreisfläche ausgebildet sein, an deren Mittelpunkt sich der Mover befindet. Es sind jedoch auch andere Formen für die Festlegung des Umfeldes möglich. Zudem kann das vorgegebene Umfeld von weiteren Parametern wie zum Beispiel der Geschwindigkeit des Movers und/oder der Entfernung zum Zielpunkt abhängen. Beispielsweise kann bei einer größeren Geschwindigkeit des Movers ein größeres Umfeld festgelegt werden als bei einer kleineren Geschwindigkeit des Movers. Zudem kann beispielsweise bei einem größeren Abstand zum Zielpunkt ein größeres Umfeld als bei einem kleineren Abstand zum Zielpunkt gewählt werden. Für die Beurteilung der größeren oder kleineren Geschwindigkeit bzw. für die Beurteilung des größeren oder kleineren Abstandes zum Zielpunkt können festgelegte Grenzwerte verwendet werden. Liegt die Geschwindigkeit des Movers über dem vorgegebenen Geschwindigkeitsgrenzwert, so wird eine hohe Geschwindigkeit des Movers erkannt und dementsprechend das Umfeld festgelegt. Liegt der Abstand des Movers zum Zielpunkt über dem vorgegebenen Abstandsgrenzwert, so wird ein großer Abstand des Movers zum Zielpunkt erkannt und dementsprechend das Umfeld festgelegt.

Die Verwendung eines Graphen mit einer unterschiedlich hohen Genauigkeit bzw. einer unterschiedlichen Dichte an Kanten und/oder Knoten bietet den Vorteil, dass in einem näheren Umfeld des Movers eine genauere Planung des Pfades möglich ist. Dies ist insbesondere dann von Vorteil, wenn die Pfadplanung in vorgegebenen Zeitabständen oder nach vorgegebenen zurückgelegten Wegstrecken wiederholt wird. Auf diese Weise wird eine Nahfeldplanung durchgeführt, die genau ist und eine gewünschte Optimierung des Pfades ermöglicht. Die Fernfeldplanung wird hingegen ungenau und grober ausgeführt, wodurch Rechenzeit eingespart wird und zudem der gesamte Pfad vom Startpunkt bzw. von der aktuellen Position des Movers bis zu dem Zielpunkt schneller ermittelt werden kann.

In einer weiteren Ausführungsform der Vorrichtung ist die Steuereinheit ausgebildet, die Pfadplanung in vorgebbaren Zeitzyklen durchzuführen. Beispielsweise kann ein Zeitzyklus im Bereich von 100µs bis zu 400µs liegen. Dies bedeutet, dass die Pfadplanung wiederholt jeweils nach einem Zeitbereich von 100µs bis 400µs wiederholt wird. Zudem kann ein Zeitzyklus auch im Bereich von 1ms liegen.

Die Gewichtung der Kanten kann zudem davon abhängen, ob ein statisches oder ein bewegliches Hindernis wenigstens teilweise in einem Bereich der Antriebsfläche angeordnet ist, über das die Kante führt. Ein statisches Hindernis kann z.B. ein Objekt sein, das auf der Antriebsfläche angeordnet ist und sich nicht bewegt. Ein bewegliches Hindernis kann ein sich auf der Antriebsfläche bewegendes Objekt, insbesondere ein anderer Mover sein. Dadurch können zum einen Kollisionen vermieden werden und zum anderen Abbremsvorgänge und/oder Beschleunigungsvorgänge, die zum einen Zeit und zum anderen Energie für die Ansteuerung der Magnetfelderzeuger kosten, reduziert oder vermieden werden.

In einer weiteren Ausführungsform kann das vorgegebene Umfeld von der Geschwindigkeit des Movers abhängen, beispielsweise ein radiales Umfeld um den Mover betreffen, dass der Mover mit der aktuellen Geschwindigkeit innerhalb eines vorgegebenen Zeitbereiches zurücklegt. Beispielsweise kann der Zeitbereich 1 bis 10 Zeitzyklen umfassen, wobei die Pfadplanung in jeder Zeitzyklus wiederholt von der Steuereinheit durchgeführt wird.

In einer Weiterbildung ist die Steuereinheit ausgebildet, die Pfadplanung in zwei Planungsebenen auszuführen. In einer ersten Planungsebene wird eine erste Pfadplanung mit einem ersten Graphen ausgeführt und ein erster Pfad für die Bewegung des Movers ermittelt. Zudem ermittelt die Steuereinheit in einer zweiten Planungsebene eine zweite Pfadplanung mit einem zweiten Graphen. Bei der zweiten Pfadplanung wird ein zweiter Pfad für die Bewegung des Movers ermittelt. Der erste Graph weist eine kleinere Dichte an Knoten und/oder Kanten als der zweite Graph auf. Zudem ist die Steuereinheit ausgebildet, um beide Pfadplanungen für die Pfadplanung des Movers zu berücksichtigen. Somit kann mithilfe der ersten Pfadplanung eine ungenauere Planung des Pfades für den Mover erreicht werden. Beispielsweise kann die erste Pfadplanung verwendet werden, um einen ungenauen ersten Pfad von der Position des Movers bis zum Zielpunkt zu ermitteln. Zudem kann die zweite Pfadplanung verwendet werden, um einen zweiten Pfad mit einer höheren Genauigkeit und somit einen optimierten Pfad für ein vorgebbares Umfeld des Movers zu ermitteln.

In einer Ausführungsform weisen der erste Graph und der zweite Graph keine gemeinsamen Knoten auf. Bei dieser Ausführungsform wird für den zweiten Graphen nach vorgegebenen Regeln ein Ziel ausgewählt. Beispielsweise wird der Knoten des zweiten Graphen als Ziel gewählt, der dem letzten Knoten des ersten Graphen im Ausdehnungsbereich des zweiten Graphen am nächsten liegt.

In einer Weiterbildung sind der erste und der zweite Graph wenigstens über einen gemeinsamen Knoten miteinander verbunden. Der gemeinsame Knoten wird von der Steuereinheit berücksichtigt. Beispielsweise kann der gemeinsame Knoten, der auf einem ermittelten ersten Pfad liegt, wenigstens als Zwischenziel für die zweite Pfadplanung verwendet werden. In einer Ausführungsform sind mehrere gemeinsame Knoten zwischen dem ersten und dem zweiten Graphen vorgesehen. Ein gemeinsamer Knoten zwischen dem ersten und dem zweiten Graphen ist ein Knoten, der sowohl im ersten Graphen als auch im zweiten Graphen vorgesehen ist. Zudem kann ein erster Pfad ermittelt werden, auf dem mehrere gemeinsame Knoten liegen. Die gemeinsamen Knoten des ersten Pfades werden von der zweiten Pfadplanung als Zwischenziele berücksichtigt. Auf diese Weise kann ein optimiertes Verfahren mit einer relativ optimierten Pfadplanung und einer begrenzten Rechenzeit bereitgestellt werden.

Abhängig von der gewählten Ausführungsform wird für die zweite Pfadplanung ein nächstliegender gemeinsamer Knoten als Zwischenziel verwendet, der auf dem ersten Pfad liegt. Unter einem nächstliegenden Knoten wird ein Knoten verstanden, der entweder in Bezug auf die Wegstrecke über Kanten des zweiten Graphen am nächsten liegt oder es wird ein gemeinsamer Knoten darunter verstanden, der auf Basis der Kanten des zweiten Graphen möglichst schnell vom Mover erreicht werden kann. Zudem können weitere Parameter für die Festlegung als nächstliegender Knoten abgespeichert sein.

In einer Weiterbildung der Vorrichtung ist die Steuereinheit ausgebildet, um die erste Pfadplanung vom Startpunkt bzw. von der aktuellen Position des Movers bis zum Zielpunkt zuerst zu berechnen und anschließend den ermittelten ersten Pfad bei der Berechnung der zweiten Pfadplanung zu berücksichtigen. Somit kann die zweite Pfadplanung gemeinsame Knoten, die auf dem ersten Pfad liegen, als Zwischenziele für die zweite Pfadplanung berücksichtigen. Für die Vorausberechnung ist es jedoch nicht erforderlich, dass zuerst die erste Pfadplanung von der aktuellen Position des Movers bis zum Zielpunkt vollständig berechnet wird, sondern es reicht aus, wenn die erste Pfadplanung bis zu einem vorgebbaren Abstand zum Mover eindeutig abgeschlossen ist, bevor die zweite Pfadplanung für diesen Bereich ausgeführt wird.

In einer Weiterbildung der Vorrichtung ist die Steuereinheit ausgebildet, um aufgrund des geplanten Pfades eine Dynamikplanung für den Mover auszuführen, um die Magnetfelderzeuger entsprechend anzusteuern. Dazu kann der Pfad z.B. nicht vollständig auf den Kanten liegen, sondern z.B. an den Ecken abgerundet werden um eine höhere Geschwindigkeit zu ermöglichen. Somit wird wenigstens abschnittsweise zuerst ein Pfad für den Mover berechnet und anschließend aufgrund des vorliegenden Pfades die Geschwindigkeit und die Beschleunigung des Movers entlang des Pfades ermittelt. Für die Berechnung der Geschwindigkeit und der Beschleunigung des Movers entlang des geplanten Pfades können weitere Parameter wie zum Beispiel eine Beladung des Movers, ein vorgegebener Bereich für eine Beschleunigung oder Abbremsung des Movers, eine vorgegebene erlaubte maximale Beschleunigung des Movers oder das Vorhandensein von mehreren in einem vorgegebenen Umfeld des Movers sich bewegenden oder befindenden weiteren Movern berücksichtigt werden.

Es wird ein Verfahren zum Antreiben wenigstens eines Movers vorgeschlagen, wobei eine Pfadplanung für den Mover von einem Startpunkt zu einem Zielpunkt ausgeführt wird. Sowohl der Startpunkt als auch der Zielpunkt können sich während der Bewegung des Movers ändern. Insbesondere kann der Startpunkt mit einer aktuellen Position des Movers gleichgesetzt werden. Bei der Pfadplanung wird ein Graph mit Knoten und Kanten verwendet. Anhand des Graphen wird ein Pfad für den Mover vom Startpunkt zum Zielpunkt ermittelt. Die Pfadplanung kann abhängig von der gewählten Ausführungsform auf den Kanten und Knoten stattfinden und/oder innerhalb des Rasters der Maschen zwischen den Kanten und Knoten. Beispielsweise kann eine diagonale Durchfahrt einer Masche von Knoten zu Knoten oder eine mittige Durchfahrt zwischen den Kanten und Knoten auch einen optimalen Weg darstellen. Durch die Verwendung des Graphen wird die Suche nach einem Pfad vom Startpunkt zum Zielpunkt anhand der vorgegebenen Kanten und Knoten des Graphen vereinfacht. Damit wird die Berechnung vereinfacht und beschleunigt. Nach der Ermittlung des Pfades werden die Magnetfelderzeuger in der Weise angesteuert, dass der Mover entlang des ermittelten Pfades über die Antriebsfläche bewegbar ist. Die Ermittlung des Pfades und die Ansteuerung des Pfades kann beispielsweise von verschiedenen Steuereinheiten ausgeführt werden.

Es wird eine Steuereinheit bereitgestellt, die ausgebildet ist, die beschriebenen Verfahren auszuführen.

Zudem wird ein Computerprogramm bereitgestellt, das Befehle aufweist, die beim Ablaufen auf einem Computer die beschriebenen Verfahren ausführen.

Die Erfindung wird nachfolgend anhand von Ausführungsbeispielen und unter Bezugnahmen auf Figuren näher erläutert. Dabei zeigen jeweils in schematischer Darstellung
**Fig. 1** ein planares Antriebssystem zum Antreiben eines Movers auf einer Antriebsfläche;
**Fig. 2** eine Ansicht eines weiteren Antriebssystems mit sechs nebeneinander angeordneten Statormodulen;
**Fig. 3** den Mover des in Fig. 1 dargestellten planaren Antriebssystems mit einer Magnetanordnung;
**Fig. 4** eine perspektivische Ansicht eines Teils des Antriebssystems entsprechend Fig. 1;
**Fig. 5** eine Explosionsansicht eines Sektors des in Fig. 1 dargestellten Antriebssystems mit einer ersten, zweiten, dritten und vierten Statorlage;
**Fig. 6** die in Fig. 5 dargestellten Statorlagen des ersten Sektors der Vorrichtung mit einzelnen Statorsegmenten;
**Fig. 7** eine schematische Darstellung einer Antriebsfläche mit einem Graphen und einer Steuereinheit;
**Fig. 8** eine schematische Darstellung der Antriebsfläche mit einem weiteren Graphen;
**Fig. 9** eine schematische Darstellung der Antriebsfläche mit einem Graphen mit unterschiedlichen Dichten an Kanten und Knoten;
**Fig. 10** eine schematische Darstellung der Antriebsfläche mit zwei Graphen, die unterschiedliche dichten an Kanten und Knoten aufweisen und
**Fig. 11** eine schematische Darstellung der Antriebsfläche mit einem weiteren Graphen. Die Erfindung betrifft im Wesentlichen Weiterentwicklungen der in den Veröffentlichungen WO 2013/059934 A1, WO 2015/017933 A1, WO 2015/179962 A1, WO 2015/184553 A1, WO 2015/188281 A1 und WO 2017/004716 A1 offenbarten planaren Antriebssysteme. Außerdem betrifft die Erfindung Weiterentwicklungen der in den deutschen Patentanmeldungen DE 10 2017 131304 A1, DE 10 2017 131314 A1, und DE 10 2017 131321 A1 offenbarten planaren Antriebssysteme.

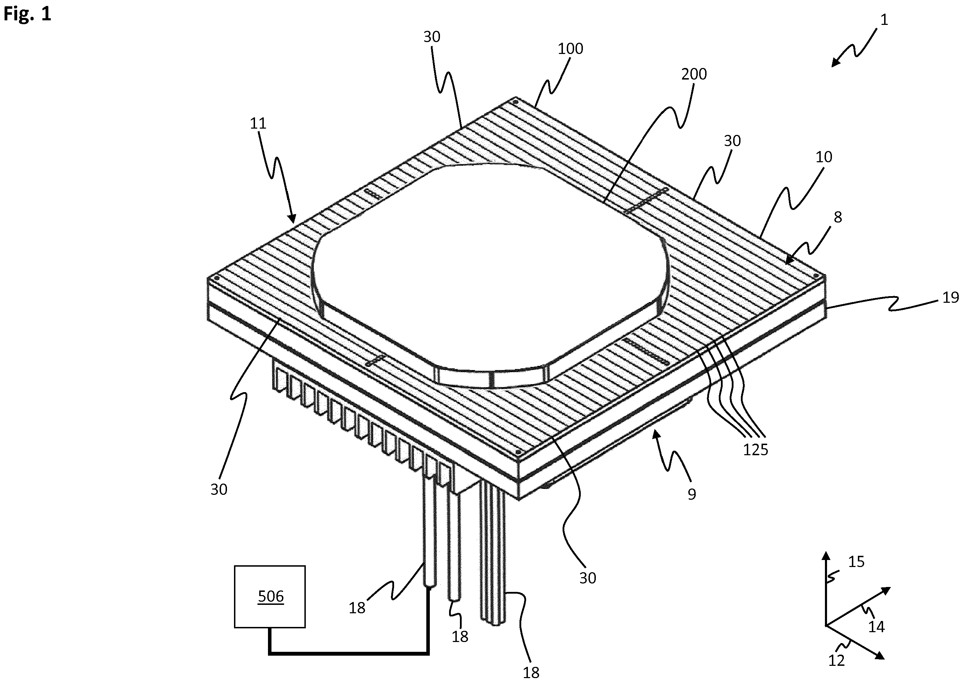

**Fig. 1** zeigt eine Vorrichtung zum Antreiben wenigstens eines Movers 200 auf einer Antriebsfläche in Form eines Planarantriebssystems 1 mit einem Statormodul 10 und einem Läufer, der durch den Mover 200 gebildet wird.

Das Statormodul 10 umfasst ein Modulgehäuse 19 und eine Statoreinheit 100. Das Statormodul 10 weist eine Oberseite 8 und eine der Oberseite 8 gegenüberliegende Unterseite 9 auf. Die Statoreinheit 100 ist in einer von der Unterseite 9 zu der Oberseite 8 orientierten vertikalen Richtung 15 oberhalb des Modulgehäuses 19 und an der Oberseite 8 des Statormoduls 10 angeordnet. Die Statoreinheit 100 ist als ein Planarstator ausgebildet und weist an der Oberseite 8 des Statormoduls 10 eine ebene, d.h. planare, Statorfläche 11 auf. Die Statorfläche 11 bildet zugleich eine Oberfläche des Statormoduls 10.

Die Statorfläche 11 ist senkrecht zu einer vertikalen Richtung 15 orientiert und erstreckt sich über die gesamte Oberseite 8 der Statoreinheit 100 und des Statormoduls 10 entlang der Richtungen 12 und 14. Die Statoreinheit 100 umfasst an der Statorfläche 11 mindestens einen mit einem Antriebsstrom beaufschlagbaren Leiterstreifen 125. Die Statoreinheit 100 kann, wie dargestellt, an der Statorfläche 11 eine Mehrzahl der Leiterstreifen 125 aufweisen. Die Leiterstreifen 125 können von einer Steuereinheit 506 jeweils mit einem Antriebsstrom beaufschlagt werden. Mittels der Antriebsströme in den Leiterstreifen 125 kann ein Magnetfeld erzeugt werden, welches den Mover 200 in Wechselwirkung mit in Fig. 1 nicht dargestellten Antriebsmagneten des Movers 200 antreibt. Der Mover 200 und die Statoreinheit 100 mit den stromdurchflossenen Leiterstreifen 125 bilden einen elektromagnetischen Planarmotor. Die Leiterstreifen 125 bilden Spulenleiter der Statoreinheit 100 und können auch als Spulenleiter bezeichnet werden.

Der Mover 200 ist im Betrieb beweglich über der Statorfläche 11 des Statormoduls 10 angeordnet und kann im Betrieb sowohl in einer ersten Richtung 12, als auch in einer zweiten Richtung 14 angetrieben werden. Die erste Richtung 12 und die zweite Richtung 14 sind linear unabhängig. Insbesondere können die erste Richtung 12 und die zweite Richtung 14, wie in Fig. 1 dargestellt, senkrecht zueinander ausgerichtet sein. Die erste Richtung 12 und die zweite Richtung 14 sind jeweils parallel zu der Statorfläche 11 und senkrecht zu der vertikalen Richtung 15 orientiert. Indem der Mover 200 zugleich in der ersten Richtung 12, als auch in der zweiten Richtung 14 angetrieben wird, kann der Mover 200 über der Statorfläche 11 in einer beliebigen Richtung angetrieben werden. Der Mover 200 kann im Betrieb schwebend über der Statorfläche 11 gehalten werden, beispielsweise durch eine magnetische Wechselwirkung zwischen den Antriebsmagneten und geeigneten Antriebsströmen in den Leiterstreifen 125. Neben einem Antreiben des Movers 200 in der ersten und/oder zweiten Richtung 12, 14 ist auch ein Antreiben in der dritten, vertikalen Richtung 15 möglich. Zudem kann der Mover 200 auch um seine Achse gedreht werden. Die Leiterstreifen stellen Leiterbahnen dar, welche auch als Magnetfelderzeuger bezeichnet werden können.

Die Statorfläche 11 ist rechteckig ausgebildet. Insbesondere kann die Statorfläche 11, wie dargestellt, quadratisch ausgebildet sein. Die Statorfläche 11 wird durch vier jeweils gerade Außenkanten 30 begrenzt. Jeweils zwei einander gegenüberliegende Außenkanten 30 sind parallel zu der ersten Richtung 12 und zwei einander gegenüberliegende weitere Außenkanten 30 sind parallel zu der zweiten Richtung 14 orientiert.

Eine Ausdehnung der Statoreinheit 100 in der vertikalen Richtung 15 ist kleiner als eine Ausdehnung der Statoreinheit 100 in der ersten und der zweiten Richtung 12, 14. Die Statoreinheit 100 bildet daher einen flachen in der ersten und zweiten Richtung 12, 14 ausgedehnten Quader oder eine in der ersten und zweiten Richtung 12, 14 ausgedehnte Platte.

An der Unterseite 9 des Statormoduls 10 oder an der Unterseite des Modulgehäuses 19 können weitere Komponenten an dem Modulgehäuse 19 oder dem Statormodul 10 angeordnet sein. Diese weiteren Komponenten reichen in der ersten Richtung 12 oder in der zweiten Richtung 14 höchstens bis an die Außenkanten 30 der Statoreinheit 100, so dass die weiteren Komponenten die Außenkanten 30 der Statoreinheit 100 in der ersten oder der zweiten Richtung 12, 14 nicht überragen.

An der Unterseite des Modulgehäuses 19 sind in Fig. 1 nicht dargestellte Anschlüsse angeordnet zur Verbindung des Statormoduls 10 mit mehreren Anschlussleitungen 18. Die Anschlussleitungen 18 können beispielsweise eine Eingangsleitung eines Datennetzwerks, eine Ausgangsleitung des Datennetzwerks und eine Energieversorgungsleitung zur Versorgung des Statormoduls 10 mit elektrischer Energie umfassen. Zudem kann eine Steuereinheit 506 mit einer Anschlussleitung 18 verbunden sein. Insbesondere kann dem Statormodul 10 über die Energieversorgungsleitung elektrische Energie zur Erzeugung der Antriebsströme zugeführt werden. Über das Datennetzwerk kann das Statormodul 10 mit einer Steuereinheit des Planarantriebssystems verbunden sein, wobei die Steuereinheit des Planarantriebssystems von der Steuereinheit 506 gebildet sein kann. Mittels des Datennetzwerks können beispielsweise Steuerdaten zum Steuern des Movers 200 bzw. zum Steuern des zielgerichteten Beaufschlagens der Leiterstreifen mit geeigneten Antriebsströmen mit der Steuereinheit 506 ausgetauscht werden.

Die Statorfläche 11 kann in der ersten Richtung 12 eine Ausdehnung zwischen 100mm und 500mm aufweisen, insbesondere zwischen 120mm und 350mm, insbesondere von 240mm. Die Statorfläche 11 kann in der zweiten Richtung 12 eine Ausdehnung zwischen 100mm und 500mm, insbesondere zwischen 120mm und 350mm, insbesondere von 240mm aufweisen. Das Statormodul 10 kann in der vertikalen Richtung 15 eine Ausdehnung zwischen 10mm und 100mm, insbesondere zwischen 15mm und 60mm, insbesondere von 30mm aufweisen. Das Modulgehäuse 19 kann in der vertikalen Richtung 15 eine Ausdehnung zwischen 8mm und 80mm, insbesondere zwischen 13mm und 55mm, insbesondere von 26,6mm aufweisen. Das Modulgehäuse 19 kann in der ersten und/oder zweiten Richtung 12, 14 die gleiche Ausdehnung aufweisen wie die Statorfläche 11.

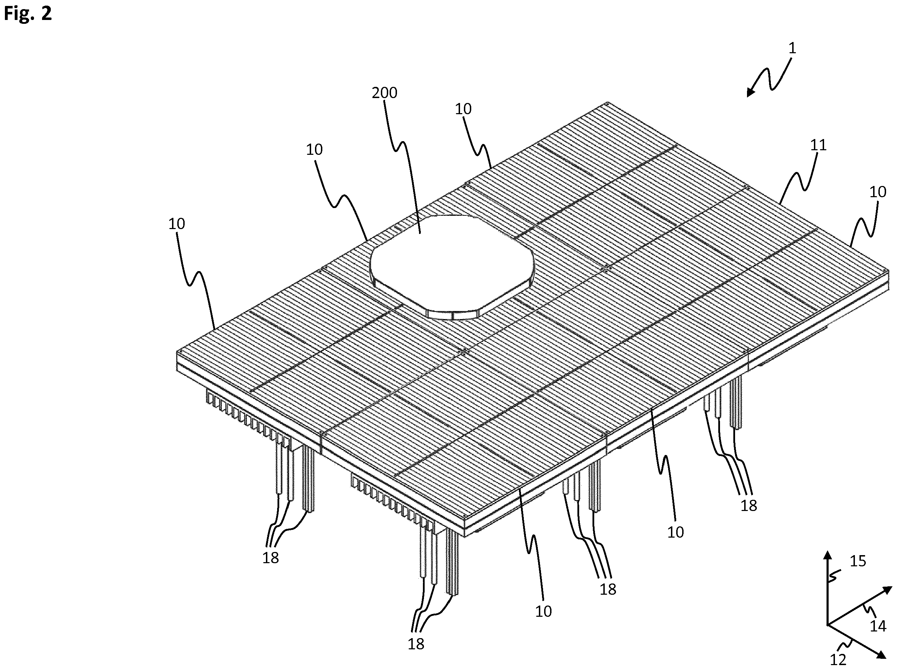

Mehrere Exemplare des Statormoduls 10 können derart nebeneinander angeordnet werden, dass die Außenkanten 30 benachbarter Statormodule 10 aneinander liegen und die Statorflächen 11 der Statormodule 10 eine zusammenhängende Antriebsfläche bilden, über die der Mover 200 unterbrechungsfrei bewegt werden kann, wie in Fig. 2 dargestellt ist. Da die Seitenflächen des Statormoduls 10 an den Außenkanten 30 bündig mit der Statorfläche 11 abschließen, können die Statorflächen 11 von zwei nebeneinander angeordneten Statormodulen 10 nahezu nahtlos aneinander anschließend angeordnet werden, indem die Statormodule 10 mit aneinander liegenden Seitenflächen der Statoreinheiten 100 oder aneinander liegenden Außenkanten 30 der Statorflächen 11 angeordnet werden.

Benachbarte Statormodule 10 sind jeweils derart aneinander anschließend angeordnet, dass die Außenkanten 30 der Statorflächen 11 benachbarter Statormodule 10 aneinander liegen. Dadurch bilden die Statorflächen 11 der Statormodule 10 eine zusammenhängende, planare Antriebsfläche für den Mover 200. Der Mover 200 kann nahtlos von der Statorfläche 11 eines der Statormodule 10 auf die oder über die Statorfläche 11 des benachbarten Statormoduls 10 bewegt werden. Jedem der Statormodule 10 können über jeweils eigene Anschlussleitungen 18 Steuersignale und/oder Energie zugeführt werden. Alternative, hier nicht dargestellte, Ausführungsformen der Statormodule 10 können auch elektrische Verbindungselemente aufweisen, mittels derer Steuersignale und/oder elektrische Energie von einem Statormodul 10 zum benachbarten Statormodul 10 übertragen werden kann. Derartige Verbindungselemente können beispielsweise an den Seitenflächen der Statormodule 10 angeordnet sein. Die Verbindungselemente können als Steckverbinder oder als aneinander anordbare Kontaktflächen ausgebildet sein.

Bei alternativen, hier ebenfalls nicht dargestellten Ausführungsformen können die Statormodule 10 auch sternförmig über jeweils eigene Anschlussleitungen an eine zentrale Energieversorgungseinrichtung und/oder eine zentrale Steuereinheit angeschlossen sein.

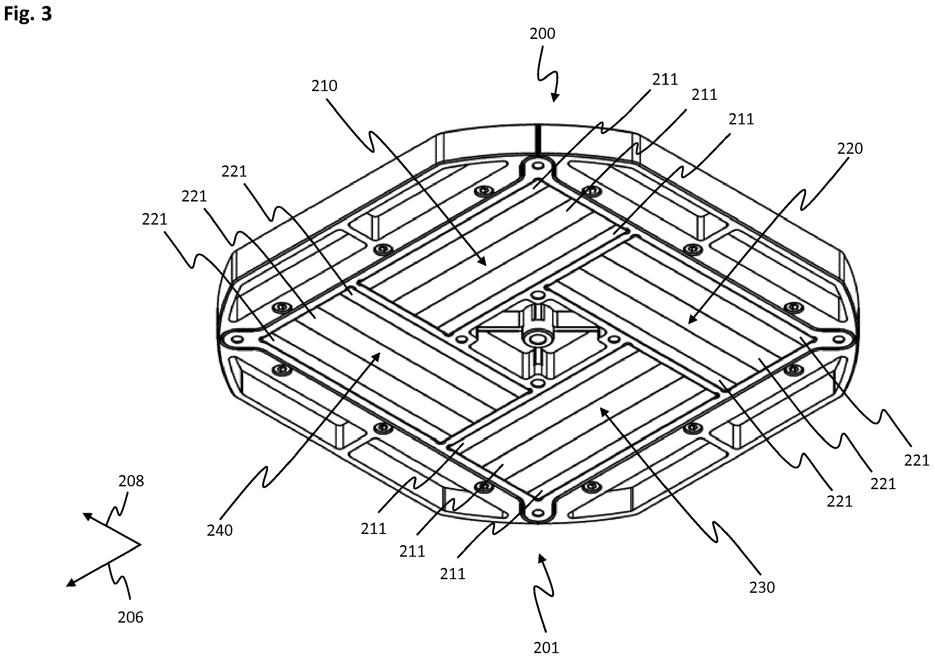

**Fig. 3** zeigt den Läufer, d.h. den Mover 200, in einer Ansicht von unten auf eine Unterseite des Movers 200. Der Mover 200 weist an der Unterseite eine Magnetanordnung 201 auf. Die Magnetanordnung 201 ist rechteckig, insbesondere quadratisch, ausgebildet und umfasst mehrere Magneten. Die Unterseite des Movers 200 ist, insbesondere im Bereich der Magneten der Magnetanordnung 201, eben bzw. planar ausgebildet. Im Betrieb ist die Unterseite des Movers 200 mit der Magnetanordnung 201 im Wesentlichen parallel zu der Statorfläche 11 orientiert und der Statorfläche 11 zugewandt angeordnet.

Die Magnetanordnung 201 umfasst eine erste Magneteinheit 210, eine zweite Magneteinheit 220, eine dritte Magneteinheit 230 und eine vierte Magneteinheit 240. Die erste Magneteinheit 210 und die dritte Magneteinheit 230 weisen jeweils in einer ersten Läuferrichtung 206 länglich ausgedehnte und entlang einer zu der ersten Läuferrichtung 206 senkrecht orientierten zweiten Läuferrichtung 208 nebeneinander angeordnete Antriebsmagnete 211 auf. Insbesondere können die erste und die dritte Magneteinheit 210, 230 jeweils drei Antriebsmagnete 211 aufweisen. Die zweite Magneteinheit 220 und die vierte Magneteinheit 240 weisen jeweils in der ersten Läuferrichtung 206 nebeneinander angeordnete und entlang der zweiten Läuferrichtung 208 länglich ausgedehnte weitere Antriebsmagnete 221 auf. Die erste und dritte Magneteinheit 210, 230 dient im Betrieb einem Antreiben des Movers 200 in der zweiten Läuferrichtung 208 und die zweite und vierte Magneteinheit 220, 240 dient im Betrieb einem Antreiben des Movers 200 in der ersten Läuferrichtung 206. Die Antriebsmagneten 211 der ersten und dritten Magneteinheit 210, 230 und die weiteren Antriebsmagneten 221 der zweiten und vierten Magneteinheit 220, 240 sind jeweils senkrecht zu der ersten und der zweiten Läuferrichtung 206, 208 magnetisiert.

Die Antriebsmagneten 211 und/oder weiteren Antriebsmagneten 221 stellen zweite Magnetfelderzeuger 250 dar. Die zweiten Magnetfelderzeuger 250 können auch andere Materialien, Funktionsprinzipien und/oder Formen aufweisen, insbesondere als Magneten oder Permanentmagneten ausgebildet sein.

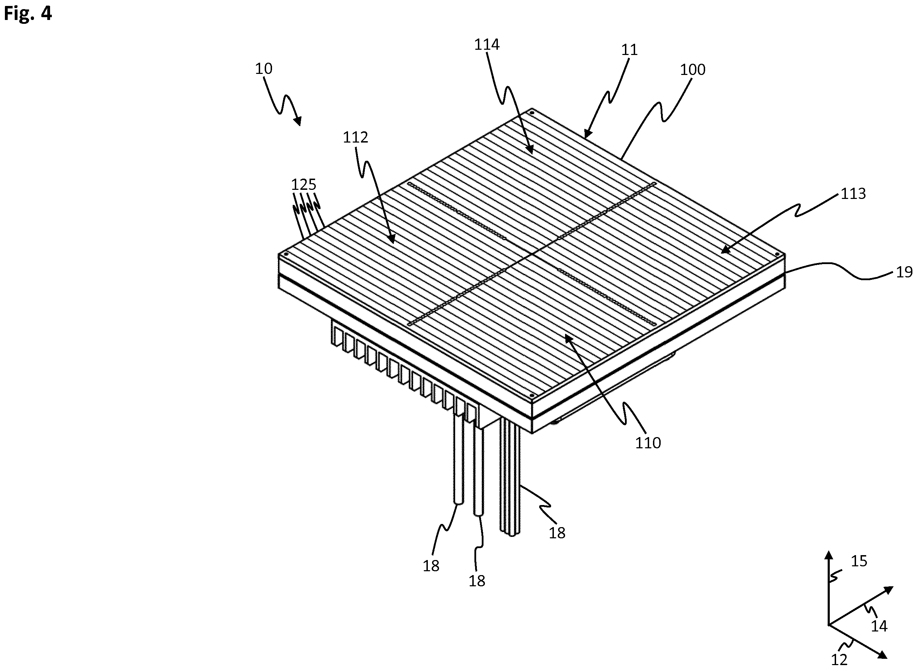

**Fig. 4** zeigt das Statormodul 10 des Planarantriebssystems 1 in einer perspektivischen Ansicht ohne den Mover 200. Die Statoreinheit 100 des Statormoduls 10 umfasst einen ersten Statorsektor 110, einen zweiten Statorsektor 112, einen dritten Statorsektor 113 und einen vierten Statorsektor 114. Die Statorsektoren 110, 112, 113, 114 umfassen ihrerseits jeweils einen Teil der an der Statorfläche 11 der Statoreinheit 100 angeordneten Leiterstreifen 125. Jeder der Leiterstreifen 125 an der Statorfläche 11 ist vollständig in einem der Statorsektoren 110, 112, 113, 114 angeordnet. Die Statorsektoren 110, 112, 113, 114 sind rechteckig ausgebildet. Insbesondere können die Statorsektoren 110, 112, 113, 114 quadratisch ausgebildet sein, so dass eine Ausdehnung der Statorsektoren 110, 112, 113, 114 in der ersten Richtung 12 einer Ausdehnung der Statorsektoren 110, 112, 113, 114 in der zweiten Richtung 14 entspricht.

Die Statorsektoren 110, 112, 113, 114 umfassen jeweils ein Viertel der Fläche, d.h. einen Quadranten, der Statoreinheit 100.

Innerhalb der Statorsektoren 110, 112, 113, 114 sind die Leiterstreifen 125 in mehreren übereinanderliegenden Statorlagen oder Statorebenen angeordnet, wobei jede der Statorlagen lediglich Leiterstreifen 125 umfasst, die entweder im Wesentlichen entlang der ersten Richtung 12 oder im Wesentlichen entlang der zweiten Richtung 14 länglich ausgedehnt sind. Von der Ausdehnung der Leiterstreifen 125 abgesehen und soweit im Folgenden keine Unterschiede beschrieben werden, sind die Statorsektoren 110, 112, 113, 114 auf den unterschiedlichen Statorlagen identisch ausgebildet. Bei der in Fig. 4 dargestellten Statoreinheit 100 des Statormoduls 10 umfasst die Statorlage an der Statorfläche 11 lediglich Leiterstreifen 125, welche entlang der ersten Richtung 12 länglich ausgedehnt und entlang der zweiten Richtung 14 nebeneinander und aneinander anschließend angeordnet sind.

Die in Fig. 4 sichtbare Statorlage an der Statorfläche 11 bildet eine erste Statorlage der Statoreinheit 100. In der vertikalen Richtung 15 unterhalb der ersten Statorlage umfasst die Statoreinheit 100 mindestens noch eine zweite Statorlage.

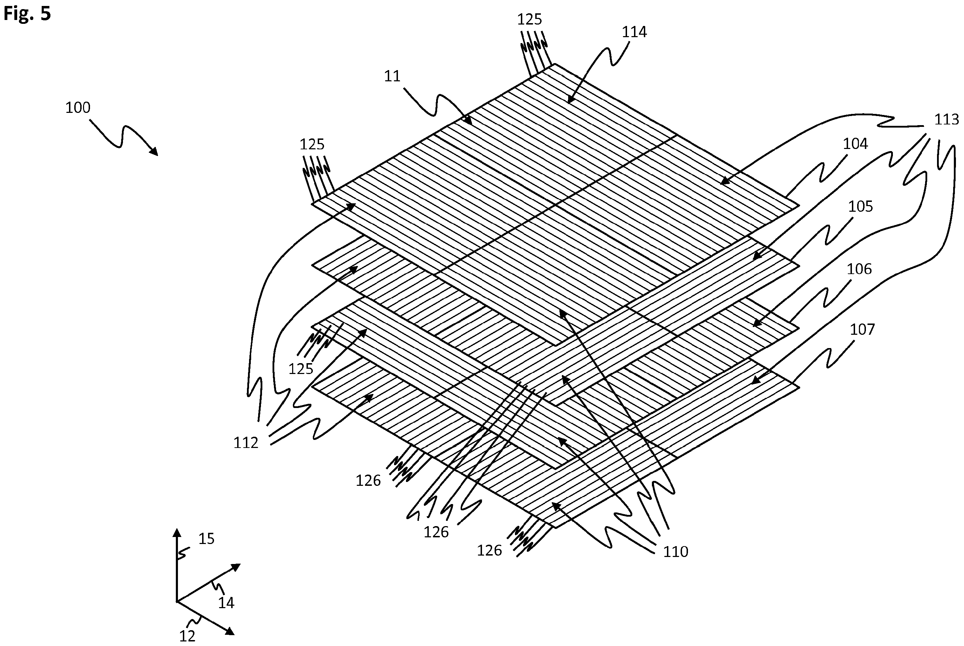

**Fig. 5** zeigt eine schematische perspektivische Darstellung einer Explosionsansicht der Statoreinheit 100 mit den einzelnen Statorlagen.

Die Statoreinheit 100 umfasst in der vertikalen Richtung 15 unter der an der Statorfläche 11 angeordneten ersten Statorlage 104 eine zweite Statorlage 105, unter der zweiten Statorlage 105 eine dritte Statorlage 106 und unter der dritten Statorlage 106 eine vierte Statorlage 107. Soweit im Folgenden keine Unterscheide beschrieben werden, sind die zweite, dritte und vierte Statorlage 105, 106, 107 ausgebildet wie die in Fig. 4 dargestellte erste Statorlage 104 an der Statorfläche 11 der Statoreinheit 100.

Die ersten bis vierten Statorsektoren 110, 112, 113, 114 umfassen in der dritten Statorlage 106, wie in der ersten Statorlage 104, entlang der ersten Richtung 12 länglich ausgedehnte und in der zweiten Richtung 14 nebeneinander und aneinander anschließend angeordnete Leiterstreifen 125. In der zweiten Statorlage 105 und in der vierten Statorlage 107 umfassen die ersten bis vierten Statorsektoren 110, 112, 113, 114 weitere Leiterstreifen 126. Soweit im Folgenden keine Unterschiede beschrieben werden, sind die weiteren Leiterstreifen 126 ausgebildet wie die Leiterstreifen 125 in der ersten Statorlage 104 und in der dritten Statorlage 106. Anders als die Leitersteifen 125 der ersten und dritten Statorlage 104, 106, sind die weiteren Leiterstreifen 126 der zweiten und vierten Statorlage 105, 107 entlang der zweiten Richtung 14 länglich ausgedehnt und in der ersten Richtung 12 nebeneinander und aneinander anschließend angeordnet.

Die ersten bis vierten Statorsektoren 110, 112, 113, 114 umfassen in der ersten und dritten Statorlage 104, 106 ausschließlich die entlang der ersten Richtung 12 länglich ausgedehnten Leiterstreifen 125 und nicht auch noch zusätzlich die entlang der zweiten Richtung 14 länglich ausgedehnten weiteren Leiterstreifen 126. Ebenso umfassen die ersten bis vierten Statorsektoren 110, 112, 113, 114 in der zweiten und vierten Statorlage 105, 107 ausschließlich die entlang der zweiten Richtung 14 länglich ausgedehnten weiteren Leiterstreifen 126 und nicht auch noch zusätzlich die entlang der ersten Richtung 12 länglich ausgedehnten Leiterstreifen 125.

Die ersten bis vierten Statorsektoren 110, 112, 113, 114 weisen in allen ersten bis vierten Statorlagen 104, 105, 106, 107 jeweils die gleichen Abmessungen auf. Insbesondere weisen die ersten bis vierten Statorsektoren 110, 112, 113, 114 in allen ersten bis vierten Statorlagen 104, 105, 106, 107 in der ersten Richtung 12 und in der zweiten Richtung 14 jeweils gleiche Abmessungen auf.

Die Leiterstreifen 125 und weiteren Leiterstreifen 126 übereinander angeordneter erster bis vierter Statorlagen 104, 105, 106, 107 sind jeweils elektrisch isoliert voneinander ausgebildet. Beispielsweise können die ersten bis vierten Statorlagen 104, 105, 106, 107 jeweils als voneinander isolierte Leiterbahnlagen einer mehrlagigen Leiterplatte ausgebildet sein.

Die ersten bis vierten Statorsektoren 110, 112, 113, 114 sind unabhängig voneinander bestrombar ausgebildet. Insbesondere sind die Leiterstreifen 125 und die weiteren Leiterstreifen 126 der ersten bis vierten Statorsektoren 110, 112, 113, 114 auf der Statoreinheit 100 elektrisch isoliert voneinander ausgebildet.

Während die Leiterstreifen 125 und weiteren Leiterstreifen 126 der einzelnen ersten bis vierten Statorsektoren 110, 112, 113, 114 auf der Statoreinheit 100 jeweils elektrisch isoliert von den Leiterstreifen 125 und weiteren Leiterstreifen 126 der übrigen ersten bis vierten Statorsektoren 110, 112, 113, 114 ausgebildet sind, können die Leiterstreifen 125 und weiteren Leiterstreifen 126 innerhalb der einzelnen ersten bis vierten Statorsektoren 110, 112, 113, 114 jeweils elektrisch leitend miteinander verbunden sein. Insbesondere können innerhalb der ersten bis vierten Statorsektoren 110, 112, 113, 114 jeweils übereinanderliegende Leiterstreifen 125 der ersten Statorlage 104 und der dritten Statorlage 106 elektrisch leitend miteinander verbunden sein. Beispielsweise können jeweils übereinanderliegende Leiterstreifen 125 der ersten bis vierten Statorsektoren 110, 112, 113, 114 in Reihe geschaltet sein. Ebenso können innerhalb der ersten bis vierten Statorsektoren 110, 112, 113, 114 jeweils übereinanderliegende weitere Leiterstreifen 126 der zweiten Statorlage 105 und der vierten Statorlage 107 elektrisch leitend miteinander verbunden sein. Beispielsweise können jeweils übereinanderliegende weitere Leiterstreifen 126 der ersten bis vierten Statorsektoren 110, 112, 113, 114 in Reihe geschaltet sein.

Alternative, hier nicht dargestellte Ausführungsformen der Statoreinheit 100 können zwischen der zweiten und dritten Statorlage 105, 106 in der vertikalen Richtung 15 untereinander angeordnete weitere Statorlagen umfassen. Dabei kann die Statoreinheit 100 in der vertikalen Richtung 15 jeweils abwechselnd Statorlagen mit im Wesentlichen entlang der ersten Richtung 12 länglich ausgedehnten Leiterstreifen 125 und Statorlagen mit im Wesentlichen entlang der zweiten Richtung 14 länglich ausgedehnten weiteren Leiterstreifen 126 umfassen. Bei einer dazu alternativen, ebenfalls nicht dargestellten Ausführungsform kann die Statoreinheit 100 in der vertikalen Richtung 15 jeweils Statorlagen mit im Wesentlichen entlang der ersten Richtung 12 länglich ausgedehnten Leiterstreifen 125 und Statorlagen mit im Wesentlichen entlang der zweiten Richtung 14 länglich ausgedehnten weiteren Leiterstreifen 126 umfassen, wobei die Summe der Statorlagen mit im Wesentlichen entlang der ersten Richtung 12 länglich ausgedehnten Leiterstreifen 125 und die Summe der Statorlagen mit im Wesentlichen entlang der zweiten Richtung 14 länglich ausgedehnten weiteren Leiterstreifen 126 einen gleichen mittleren Abstand zu der Statorfläche 11 aufweisen. Außerdem können bei alternativen, nicht dargestellten Ausführungsformen der Statoreinheit 100 zwischen der ersten und der zweiten Statorlage 104, 105 und/oder zwischen der dritten und der vierten Statorlage 106, 107 weitere Statorlagen mit entlang der ersten Richtung 12 ausgedehnten Leiterstreifen 125 oder mit entlang der zweiten Richtung 14 ausgedehnten weiteren Leiterstreifen 126 angeordnet sein.

Die Leiterstreifen 125, 126 der ersten bis vierten Statorsektoren 110, 112, 113, 114 sind innerhalb der ersten bis vierten Statorlagen 104, 105, 106, 107 jeweils zu Statorsegmenten zusammengefasst.

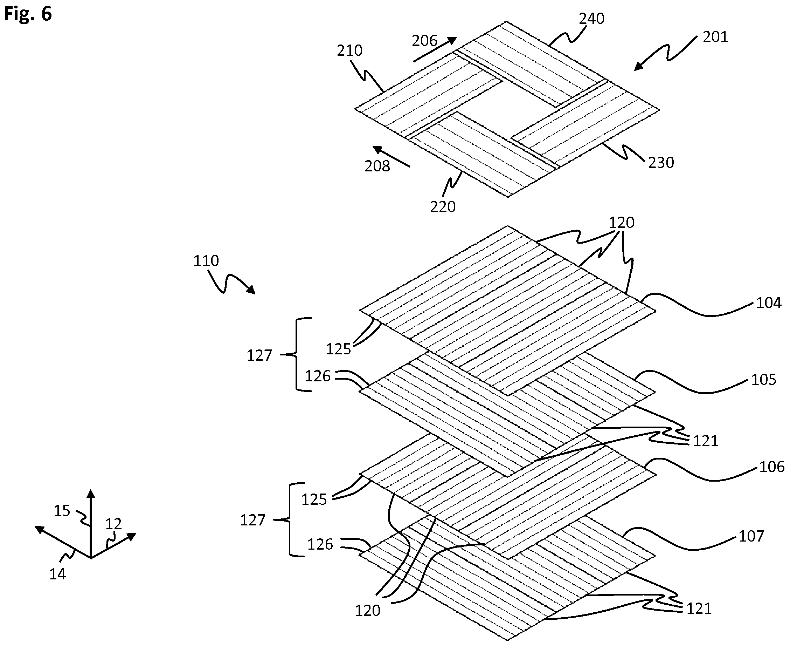

Fig. 6 zeigt eine schematische Darstellung der ersten bis vierten Statorlagen 104, 105, 106, 107 des ersten Statorsektors 110 mit den einzelnen Statorsegmenten.

Die Leiterstreifen 125 und weiteren Leiterstreifen 126 des ersten Statorsektors 110 sind innerhalb der ersten bis vierten Statorlagen 104, 105, 106, 107 jeweils zu Statorsegmenten 120, 121 zusammengefasst. Der erste Statorsektor 110 umfasst in jeder ersten bis vierten Statorlage 104, 105, 106, 107 jeweils drei nebeneinander und aneinander anschließend angeordnete Statorsegmente 120, 121. Jedes der Statorsegmente 120, 121 umfasst jeweils sechs nebeneinander angeordnete Leiterstreifen 125 oder weitere Leiterstreifen 126. Der erste Statorsektor 110 umfasst in der ersten und dritten Statorlage 104, 106 jeweils drei erste Statorsegmente 120 und in der zweiten und vierten Statorlage 105, 107 jeweils drei zweite Statorsegmente 121. Die ersten Statorsegmente 120 umfassen jeweils sechs nebeneinanderliegende der entlang der zweiten Richtung 14 nebeneinander angeordneten und entlang der ersten Richtung 12 länglich ausgedehnten Leiterstreifen 125. Die zweiten Statorsegmente 121 umfassen jeweils sechs nebeneinanderliegende der entlang der ersten Richtung 12 nebeneinander angeordneten und entlang der zweiten Richtung 14 länglich ausgedehnten weiteren Leiterstreifen 126.

Der erste Statorsektor 110 der Statoreinheit 100 umfasst damit in der ersten Statorlage 104 und in der dritten Statorlage 106 ausschließlich Leiterstreifen 125, die entlang der ersten Richtung 12 länglich ausgedehnt sind, und in der zweiten Statorlage 105 und in der vierten Statorlage 107 ausschließlich weitere Leiterstreifen 126, die entlang der zweiten Richtung 14 länglich ausgedehnt sind.

Die ersten und zweiten Statorsegmente 120, 121 weisen, abgesehen von ihrer Orientierung, identische Abmessungen auf. Insbesondere entsprechen die Abmessungen der ersten Statorsegmente 120 in der ersten Richtung 12 den Abmessungen der zweiten Statorsegmente 121 in der zweiten Richtung 14 und die Abmessungen der ersten Statorsegmente 120 in der zweiten Richtung 14 entsprechen den Abmessungen der zweiten Statorsegmente 121 in der ersten Richtung 12.

Die Statorsegmente 120, 121 sind derart übereinanderliegend angeordnet, dass sich jeweils jedes der ersten Statorsegmente 120 der ersten und dritten Statorlage 104, 106 des ersten Statorsektors 110 in der ersten Richtung 12 über die drei in der ersten Richtung 12 nebeneinander angeordneten zweiten Statorsegmente 121 der zweiten und vierten Statorlage 105, 107 des ersten Statorsektors 110 erstreckt. Außerdem erstrecken sich die zweiten Statorsegmente 121 der zweiten und vierten Statorlage 105, 107 des ersten Statorsektors 110 in der zweiten Richtung 14 über alle in der zweiten Richtung 14 nebeneinander angeordneten ersten Statorsegmente 120 der ersten und dritten Statorlage 104, 106 des ersten Statorsektors 110.

Die Anordnung der Leiterstreifen 125 und weiteren Leiterstreifen 126 in den ersten bis vierten Statorlagen 104, 105, 106, 107 des zweiten Statorsektors 112, des dritten Statorsektors 113 und des vierten Statorsektors 114 entspricht der in Fig. 6 dargestellten Anordnung der Leiterstreifen 125 und weiteren Leiterstreifen 126 in den ersten bis vierten Statorlagen 104, 105, 106, 107 des ersten Statorsektors 110.

Im Betrieb des Planarantriebssystems 1 kann der Mover 200 derart über der Statoreinheit 100 ausgerichtet sein, dass die erste Läuferrichtung 206 entlang der ersten Richtung 12 und die zweite Läuferrichtung 208 entlang der zweiten Richtung 14 orientiert ist. Die erste Magneteinheit 210 und die dritte Magneteinheit 230 können im Betrieb mit dem durch die Leiterstreifen 125 der ersten Statorsegmente 120 erzeugten Magnetfeld wechselwirken, um den Mover 200 entlang der zweiten Richtung 14 anzutreiben. Die zweite Magneteinheit 220 und die vierte Magneteinheit 240 können im Betrieb mit dem durch die weiteren Leiterstreifen 126 der zweiten Statorsegmente 121 erzeugten Magnetfeld wechselwirken, um den Mover 200 entlang der ersten Richtung 12 anzutreiben.

Alternativ kann der Mover 200, anders als in Fig. 6 dargestellt, auch derart ausgerichtet sein, dass die erste Läuferrichtung 206 entlang der zweiten Richtung 14 und die zweite Läuferrichtung 208 entlang der ersten Richtung 12 orientiert ist. In diesem Fall wirken die erste und die dritte Magneteinheit 210, 230 mit dem Magnetfeld der zweiten Statorsegmente 121 zum Antreiben des Movers 200 in die erste Richtung 12 und die zweite und die vierte Magneteinheit 220, 240 mit dem Magnetfeld der ersten Statorsegmente 120 zum Antreiben des Movers 200 in die zweite Richtung 14 zusammen.

Die Leiterstreifen 125 oder weiteren Leiterstreifen 126 der einzelnen ersten oder zweiten Statorsegmente 120, 121 sind jeweils unabhängig von den Leiterstreifen 125 oder weiteren Leiterstreifen 126 der übrigen ersten oder zweiten Statorsegmente 120, 121 mit den Antriebsströmen bestrombar. Insbesondere hängen die Antriebsströme in einem der ersten oder zweiten Statorsegmente 120, 121 nicht zwingend von Antriebsströmen in einem der anderen ersten oder zweiten Statorsegmente 120, 121 ab. Außerdem können die Leiterstreifen 125 oder weiteren Leiterstreifen 126 eines der ersten oder zweiten Statorsegmente 120, 121 mit Antriebsströmen beaufschlagt werden, während die Leiterstreifen 125 oder weiteren Leiterstreifen 126 eines anderen, beispielsweise eines benachbarten, ersten oder zweiten Statorsegments 120, 121 stromlos sind. Die Leiterstreifen 125 oder weiteren Leiterstreifen 126 der einzelnen ersten oder zweiten Statorsegmente 120, 121 sind auf der Statoreinheit 100 elektrisch isoliert von den Leiterstreifen 125 oder weiteren Leiterstreifen 126 der übrigen ersten oder zweiten Statorsegmente 120, 121 ausgeführt. Die Leiterstreifen 125 oder weiteren Leiterstreifen 126 unterschiedlicher erster oder zweiter Statorsegmente 120, 121 können beispielsweise aus jeweils separaten Leistungsmodulen oder aus separaten Stromerzeugungseinheiten bzw. Endstufen eines Leistungsmoduls des Statormoduls 10 mit den Antriebsströmen beaufschlagt werden.

Die Leiterstreifen 125 oder weiteren Leiterstreifen 126 in den einzelnen ersten bis vierten Statorsektoren 110, 112, 113, 114 können jeweils zu Mehrphasensystemen mit einem gemeinsamen Sternpunkt zusammengeschaltet sein. Der Sternpunkt kann auf der Statoreinheit 100 ausgebildet sein. Insbesondere können die Leiterstreifen 125 oder weiteren Leiterstreifen 126 zu Dreiphasensystemen mit einem gemeinsamen Sternpunkt zusammengeschaltet sein. Die Dreiphasensysteme können jeweils sechs benachbarte Leiterstreifen 125 oder sechs benachbarte weitere Leiterstreifen 126 umfassen. Die Anzahl benachbarter Leiterstreifen 125 oder weiteren Leiterstreifen 126 in einem der Dreiphasensysteme kann auch jeweils drei, zwölf oder ein anderes Vielfaches von drei betragen.

Die Mehrphasensysteme können auf der Statoreinheit 100 derart kontaktierbar sein, dass jedes der Mehrphasensysteme unabhängig von den übrigen Mehrphasensystemen mit einem Antriebsstrom beaufschlagbar ist. Alternativ können auch jeweils zwei oder mehr der Mehrphasensysteme auf der Statoreinheit 100 derart miteinander verbunden sein, dass die verbundenen Mehrphasensysteme jeweils zusammen mit einem gemeinsamen Antriebsstrom beaufschlagt werden. Beispielsweise können die verbundenen Mehrphasensysteme auf der Statoreinheit 100 seriell oder parallel geschaltet sein.

Bei einer Verschaltung der Leiterstreifen 125 oder weiteren Leiterstreifen 126 zu Mehrphasensystemen werden zur Bestromung der Leiterstreifen 125 oder weiteren Leiterstreifen 126 weniger Kontakte benötigt als bei einer separaten Bestromung der einzelnen Leiterstreifen 125 oder weiteren Leiterstreifen 126. Dadurch wird der für die Bestromung der Leiterstreifen 125 oder weiteren Leiterstreifen 126 benötigte Hardwareaufwand, insbesondere die Anzahl der für die Bestromung benötigten Stromerzeugungseinheiten, reduziert.

Die ersten bis vierten Statorsektoren 110, 112, 113, 114 können, wie in den Fig. 4 und 5 dargestellt, in jeder ersten bis vierten Statorlage 104, 105, 106, 107 jeweils achtzehn Leiterstreifen 125 oder weitere Leiterstreifen 126 umfassen. Jeweils sechs benachbarte Leiterstreifen 125 oder weitere Leiterstreifen 126 können zu einem Dreiphasensystem verschaltet sein und die ersten bis vierten Statorsektoren 110, 112, 113, 114 können jeweils drei in der ersten Richtung 12 nebeneinanderliegende Dreiphasensysteme und jeweils drei in der zweiten Richtung 14 nebeneinanderliegende Dreiphasensysteme umfassen. Dabei können Leiterstreifen 125 oder weitere Leiterstreifen 126, die im Wesentlichen in der gleichen Richtung 12, 14 ausgedehnt sind und in den ersten bis vierten Statorlagen 104, 105, 106, 107 übereinanderliegen, in Serie zu einem gemeinsamen Dreiphasensystem verschaltet sein. Die Leiterstreifen 125 oder weiteren Leiterstreifen 126 können dabei derart verschaltet sein, dass in der vertikalen Richtung 15 übereinanderliegende Leiterstreifen 125 oder weitere Leiterstreifen 126 jeweils mit dem gleichen Antriebsstrom beaufschlagt werden. Die Dreiphasensysteme weisen damit drei Phasen auf, die aus in den ersten bis vierten Statorlagen 104, 105, 106, 107 übereinanderliegenden Leiterstreifen 125 oder weiteren Leiterstreifen 126 zusammengeschaltet sind.

Beispielsweise können in den einzelnen ersten bis vierten Statorlagen 104, 105, 106, 107 jeweils alle übereinanderliegenden und parallel ausgerichteten Leiterstreifen 125 oder weiteren Leiterstreifen 126 in Serie geschaltet sein. Insbesondere können die Leiterstreifen 125 von in der ersten Statorlage 104 und in der dritten Statorlage 106 übereinanderliegenden Dreiphasensystemen, sowie die weiteren Leiterstreifen 126 von in der zweiten Statorlage 105 und in der vierten Statorlage 107 übereinanderliegenden Dreiphasensystemen jeweils seriell zu einem gemeinsamen Dreiphasensystem verschaltet sein. Dabei können jeweils alle in der vertikalen Richtung 15 übereinanderliegenden und parallel orientierten Leiterstreifen 125 oder weiteren Leiterstreifen 126 der ersten und dritten Statorlage 104, 106 und der zweiten und vierten Statorlage 105, 107 in Serie geschaltet sein.

Insbesondere sind bei der Statoreinheit 100 innerhalb der einzelnen Statorsegmente 120 die entlang der ersten Richtung 12 länglich ausgedehnten Leiterstreifen 125 jeweils zu Mehrphasensystemen mit einem gemeinsamen Sternpunkt verschaltet. Dabei sind die einzelnen Mehrphasensysteme verschiedener Statorsegmente 120 jeweils unabhängig voneinander bestrombar. Ebenso sind alle weiteren Leiterstreifen 126 der einzelnen weiteren Statorsegmente 121 jeweils zu weiteren Mehrphasensystemen verschaltet. Die einzelnen weiteren Mehrphasensysteme der weiteren Statorsegmente 121 sind jeweils unabhängig voneinander und unabhängig von den Mehrphasensystemen der Statorsegmente 120 bestrombar. Insbesondere sind die Leiterstreifen 125 der Statorsegmente 120 und die weiteren Leiterstreifen 126 der weiteren Statorsegmente 121 jeweils zu Dreiphasensystemen verschaltet. Die Leiterstreifen 125 und die weiteren Leiterstreifen 126 können jeweils mit einem dreiphasigen Antriebsstrom beaufschlagt werden. Die Antriebsströme umfassen eine erste Phase U, eine zweite Phase V und eine dritte Phase W, die untereinander jeweils einen Phasenversatz von 120° aufweisen.

Die Leiterstreifen 125 sind räumlich in der zweiten Richtung 14 um jeweils ein Drittel der wirksamen Wellenlänge der mit den Leiterstreifen 125 wechselwirkenden Antriebsmagnete 211 der ersten und dritten Magneteinheit 210, 230 versetzt angeordnet. Die weiteren Leiterstreifen 126 sind räumlich in der ersten Richtung 12 um jeweils ein Drittel der wirksamen weiteren Wellenlänge der mit den weiteren Leiterstreifen 126 wechselwirkenden weiteren Antriebsmagnete 221 der zweiten und vierten Magneteinheit 220, 240 versetzt angeordnet.

Der Mover stellt das bewegbare Element der Vorrichtung dar und weist Mittel zur Erzeugung eines Magnetfeldes, insbesondere Magneten oder Permanentmagneten auf. Das Magnetfeld des Movers sorgt mit dem veränderbaren Magnetfeld der Statoreinheit dafür, dass der Mover über die Statoreinheit bewegt wird, so dass insbesondere ein Luftspalt zwischen der Statoreinheit und dem Mover ausgebildet wird.

Die Leiterstreifen 125 und die weiteren Leiterstreifen 126 stellen Magnetfelderzeuger 127 dar.

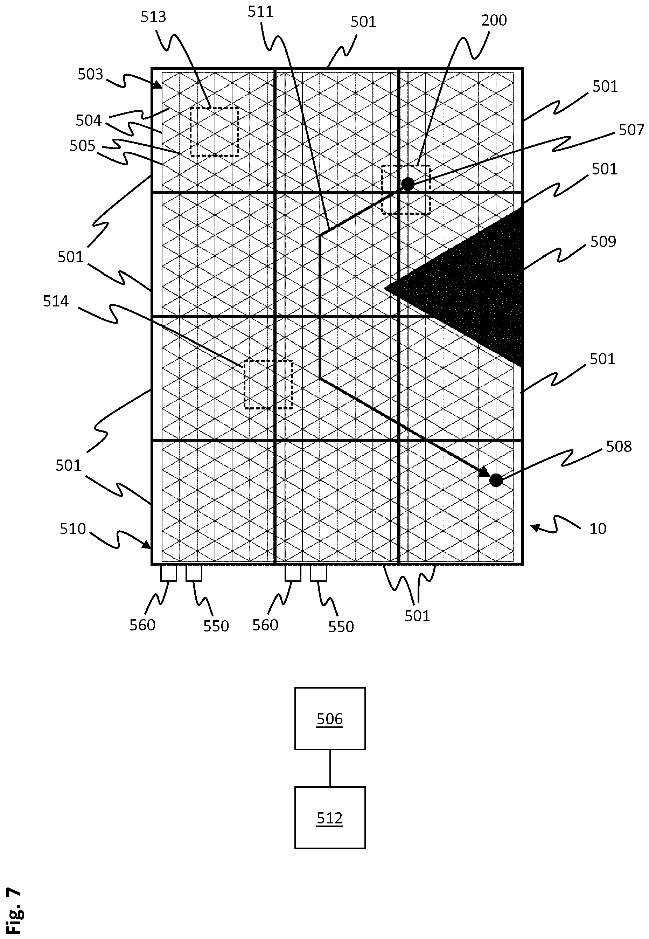

Fig. 7 zeigt in einer schematischen Darstellung einen Ausschnitt einer Antriebsfläche 510 in einer Draufsicht. Die Antriebsfläche 510 kann durch ein in den Fig. 1 bis 6 beschriebenes Planarantriebssystem ausgebildet sein. Es können jedoch auch andere Ausführungsformen von Planarantriebssystemen verwendet werden, die mithilfe von Magnetfeldern einen Mover 200 auf einer Antriebsfläche 510 bewegen. Es ist eine Anordnung von 3x4 Sektoren 501 dargestellt. Ein Sektor 501 kann durch ein Statormodul 10 der Fig. 1 bis 6 gebildet sein. Die Sektoren 501 weisen in dem Ausführungsbeispiel die Form von Quadraten auf. Abhängig von der gewählten Ausführungsform können die Sektoren auch andere Formen wie z. B. Rechtecke oder Dreiecke usw. aufweisen. Ein Sektor 501 kann z. B. eine Größe im Bereich von 150mm x 150mm bis zu 240mm x 240mm aufweisen. Abhängig von der gewählten Ausführungsform kann ein Sektor 501 auch andere Größen aufweisen. Zudem können die Sektoren 501 auch unterschiedliche Größen aufweisen.

Zudem ist ein Mover 200 dargestellt. Der Mover 200 ist beispielsweise in Form eines Läufers ausgebildet, wie in den Fig. 1 bis 3 beschrieben. Der Mover 200 kann eine quadratische, runde oder rechteckige Form oder auch andere Formen aufweisen. Der Mover 200 kann beispielsweise eine Größe im Bereich von 100mm x 100mm bis zu 200mm x 200mm aufweisen. Der Mover kann eine Dicke im Bereich von 8mm bis 20mm aufweisen. Die Antriebsfläche 510, d.h. die Statormodule 10 und der Mover 200 können ausgebildet sein, um den Mover 200 mit einer Geschwindigkeit von z. B. 1m/s bis 6m/s zu bewegen. Die Antriebsfläche 510, d.h. die Statormodule 10 und der Mover 200 können ausgebildet sein, um den Mover 200 mit einer Beschleunigung von bis zu 30m/s² oder mehr zu bewegen. Zudem kann der Mover 200 ausgebildet sein, um eine Last von bis zu 1,5kg und mehr zu tragen. Zudem kann der Mover 200 ausgebildet sein, um mit einem Abstand zur Antriebsfläche 510 von bis zu 6mm oder mehr aufzuweisen.

Der Mover 200 ist in Form eines gestrichelten Quadrates dargestellt. Weiterhin ist schematisch ein fiktiver Graph 503 mit Kanten 504 und Knoten 505 dargestellt. Der Graph 503 ist in Form eines Netzwerkes mit Kanten 504 und Knoten 505 ausgebildet. Die Kanten 504 sind in Form von geraden Linien eingezeichnet. An Kreuzungspunkten der Kanten 504 befinden sich die Knoten 505. Die Form des Graphen 503 mit den Kanten 504 und den Knoten 505, die Maschen in Form von Dreiecken begrenzen, ist eine von mehreren möglichen Ausführungsformen. Beispielsweise kann ein hier nicht dargestellter Graph Kanten und Knoten aufweisen, wobei die Kanten und Knoten Maschen in Form von Vierecken und/oder Maschen in Form von Vielecken begrenzen. Durch die Rasterung des Graphen in Maschen wird die Pfadfindung schrittweise jeweils auf eine Masche mit den die Masche begrenzenden Kanten und Knoten eingeschränkt. Der Graph 503 ist in einem Datenspeicher 512 einer Steuereinheit 506 abgelegt. Die Steuereinheit 506 kann als Computer ausgebildet sein. Zudem können Positionssensoren 560 vorgesehen sein, die die Position eines Movers 200 erfassen und an die Steuereinheit 506 übermitteln. Beispielsweise kann jedem Sektor 501 ein Positionssensor 560 zugeordnet sein. Die Positionssensoren 560 können beispielsweise als Hallsensoren ausgebildet sein.

Die Steuereinheit 506 ist ausgebildet, um für den Mover 200 abhängig von einem Startpunkt 507 eine Pfadplanung zu einem Zielpunkt 508 auszuführen. Der Startpunkt 507 kann die aktuelle Position des Movers 200 sein. Zudem kann abhängig von der gewählten Ausführungsform der Startpunkt 507 auch unabhängig von der aktuellen Position des Movers 200 vorgegeben sein. Der Zielpunkt 508 befindet sich in dem beschriebenen Ausführungsbeispiel auf einem Knoten 505 des Graphen 503 im rechten unteren Sektor 501. Als Startpunkt 507 wird ein Knoten 505 nahe dem Mittelpunkt des Movers 200 angenommen. Durch die Verwendung des Graphen 503 wird die Pfadplanung durch die Maschen und die Kanten und Knoten beschränkt. Anhand der Maschen, Kanten und Knoten wird ein Pfad für den Mover 200 vom Startpunkt 507 zum Zielpunkt 508 gesucht. Nach oder während der Ermittlung des Pfades kann der Pfad nach vorgegebenen Regeln geglättet werden, um zu starke Richtungsänderungen entlang des Pfades zu vermeiden. Beispielsweise können Abschnitte des Pfades, die einen Krümmungsradius unter einem vorgegebenen Grenzwert aufweisen, in der Weise angepasst werden, dass die Krümmungsradien über dem Grenzwert liegen.

Zudem können Bereiche der Antriebsfläche 510 durch ein Objekt 509 oder einen weiteren ersten oder zweiten Mover 513, 514, die als gestrichelte Quadrate dargestellt sind, für die Pfadplanung gesperrt sein. Die weiteren ersten oder zweiten Mover 513, 514 können jeweils in Form eines Läufers ausgebildet sein, der anhand der Fig. 1 bis 3 beschrieben wurde.

Liegen der Startpunkt 507 und/oder der Zielpunkt 508 nicht genau auf einem Knoten 505 oder einer Kante 504 des Graphen 503, so kann von der Steuereinheit 506 als Startpunkt 507 und als Zielpunkt 508 für die Suche im Graphen 503 ein Punkt einer Kante 504 oder ein Knoten 505 als Startpunkt 507 oder Zielpunkt 508 verwendet werden, der dem Startpunkt 507 bzw. dem Zielpunkt 508 am nächsten liegt. Liegen der Startpunkt 507 und/oder der Zielpunkt 508 nicht genau auf einem Knoten 505 oder einer Kante 504 des Graphen 503, sondern in einer Masche des Graphen 503, so kann von der Steuereinheit 506 auch dieser Startpunkt 507 und/oder dieser Zielpunkt 508 für die Suche im Graphen 503 verwendet werden.

Bei einer einfachen Pfadplanung ermittelt die Steuereinheit 506 zum Beispiel den kürzesten Weg zwischen dem Startpunkt 507 und dem Zielpunkt 508 unter Verwendung der vorhandenen Kanten 504 des Graphen 503 und unter Umfahrung des Objektes 509. Schematisch ist in Fig. 7 ein Pfad 511 entlang von Kanten 504 eingezeichnet, den die Steuereinheit 506 ermittelt hat, wobei der Mover 200 entlang des Pfades von dem Startpunkt 507 zum Zielpunkt 508 bewegt werden soll.

Wie bereits oben ausgeführt, kann während der Pfadplanung oder zum Ende der Pfadplanung der ermittelte Pfad geglättet werden. Zudem kann auch der kürzeste Weg unabhängig von den Kanten 504 und den Knoten 505 quer über Maschen von Kanten zu Kanten und/oder Knoten gesucht werden. Zudem wird auf dem Pfad 511 von der Steuereinheit 506 eine Dynamikplanung durchgeführt. Dazu wird abhängig von dem ermittelten Pfad 511 und weiteren Randbedingungen wie zum Beispiel einer maximalen Geschwindigkeit des Movers 200, einer maximalen negativen und/oder positiven Beschleunigung des Movers 200 oder einer maximalen zulässigen Querbeschleunigung des Movers 200 die Geschwindigkeit des Movers 200 entlang dem Pfad 511 und/oder die negativen und positiven Beschleunigungen des Movers 200 entlang dem Pfad 511 ermittelt. Zudem können weitere Randbedingungen berücksichtigt werden, die z.B. festlegen, zu welchen Zeitpunkten der Mover sich an welcher Position des Pfades befinden sollte. Anschließend werden von der Steuereinheit 506 die Magnetfelderzeuger der Sektoren 501 in der Weise bestromt, dass der Mover 200 entlang dem Pfad 511 vom Startpunkt 507 zum Zielpunkt 508 bewegt wird. Abhängig von der gewählten Ausführungsform kann die Pfadplanung und/oder die Dynamikplanung und/oder die Ansteuerung der Magnetfelderzeuger, d.h. die Stromversorgung der Magnetfelderzeuger von verschiedenen Steuereinheiten und/oder von verschiedenen Programmen einer Steuereinheit 506 ausgeführt werden.

In einer weiteren Ausführungsform weisen Kanten 504 oder wenigstens Teile von Kanten 504 zwischen zwei Knotenpunkten 505 eine Gewichtung auf. Die Gewichtungen der Kanten 504 können z. B. in dem Datenspeicher 512 oder in einem separaten Datenspeicher abgelegt sein. Die Steuereinheit 506 ist mit dem Datenspeicher 512 verbunden. Bei der Pfadplanung berücksichtigt die Steuereinheit 506 die Gewichtungen der Kanten 504 des Graphen 503, die im Datenspeicher 512 abgelegt sind.

Eine Gewichtung einer Kante 504 kann beispielsweise von der Länge der Kante abhängen, die der Mover 200 bei Benutzen der Kante 504 fahren müsste. Je länger die Kante ist, umso größer kann die Gewichtung der Kante 504 sein. Zudem kann die Gewichtung einer Kante 504 davon abhängen, mit welcher maximalen Geschwindigkeit die Kante 504 vom Mover 200 befahren werden kann. Je kleiner die maximale Geschwindigkeit ist, umso größer kann die Gewichtung der Kante 504 sein. Zudem kann die Gewichtung der Kante 504 davon abhängen, ob sich ein Hindernis auf der Kante 504 befindet. Befindet sich ein Hindernis auf der Kante 504 oder so nah an der Kante 504, dass ein Mover 200bei einer Fahrt entlang der Kante 504 mit dem Hindernis zusammenstoßen würde, so erhält die Kante 504 eine so hohe Gewichtung, dass diese Kante 504 bei der Pfadplanung von der Steuereinheit 506 nicht berücksichtigt wird.

Abhängig von der gewählten Ausführungsform kann eine Kante 504, auf der sich ein Objekt 509 als Hindernis befindet, auch von der Pfadplanung ausgenommen sein. Das Hindernis kann ein feststehendes, d.h. statischen, Hindernis in Form eines Objektes 509 oder ein bewegliches Hindernis in Form eines weiteren ersten oder zweiten Mover 513, 514 sein. Da sich die weiteren ersten oder zweiten Mover 513, 514 selbst bewegen können und damit bewegliche Hindernisse darstellen, können sich die Gewichtungen der Kanten 504 mit der Position der weiteren ersten und/oder zweiten Mover 513, 514 zeitlich ändern. Nur bei einem feststehenden, d.h. statischen, Hindernis bleibt eine Sperrung der Kanten 504, die durch die entsprechende Gewichtung festgelegt ist, zeitlich unverändert.

Zudem kann eine Gewichtung einer Kante 504 von einer Temperatur des Sektors 501 abhängen, über den die Kante 504 führt. Beispielsweise kann die Gewichtung umso höher sein, je größer die Temperatur des Sektors 501 ist. Durch die Bestromung der Magnetfelderzeuger der Sektoren 501 heizen sich die Sektoren 501 auf. Eine zu hohe Temperatur kann für einen Sektor 501 und insbesondere für einen Magnetfelderzeuger eines Sektors 501 negativ sein. Somit kann es vorteilhaft sein, zu hohe Temperaturen der Sektoren 501 zu vermeiden. Für die Erfassung der Temperaturen der Sektoren 501 können entsprechende Temperatursensoren 550 bei den Sektoren 501 vorgesehen sein. Die Temperatursensoren 550 übermitteln die aktuelle Temperatur des Sektors 501 an die Steuereinheit 506. Entsprechend kann die Steuereinheit 506 die Gewichtung der Kanten 504 eines Sektors 501 abhängig von der Temperatur des Sektors 501 verändern. Werden beispielsweise zu meidende Kanten 504 durch eine hohe Gewichtung festgelegt, so kann die Gewichtung der Kanten 504 eines Sektors 501 mit zunehmender Temperatur des Sektors 501 erhöht werden. Abhängig von der gewählten Ausführungsform können abhängig von einem Überschreiten einer Grenztemperatur eines Sektors 501 die Kanten 504, die über den Sektor 501 führen, durch eine entsprechend hohe Gewichtung vollständig gesperrt werden. Somit kann bei der Pfadplanung die Temperatur der Sektoren 501 berücksichtigt werden.

Beispielsweise kann zu jeder einzelnen Kante 504, die zwischen zwei Knoten 505 des Graphen 503 ausgebildet ist, eine entsprechende Gewichtung im Datenspeicher abgespeichert sein. Die Gewichtungen der Kanten können z.B. von der Steuereinheit 506 nach vorgegebenen Regeln verändert werden kann.

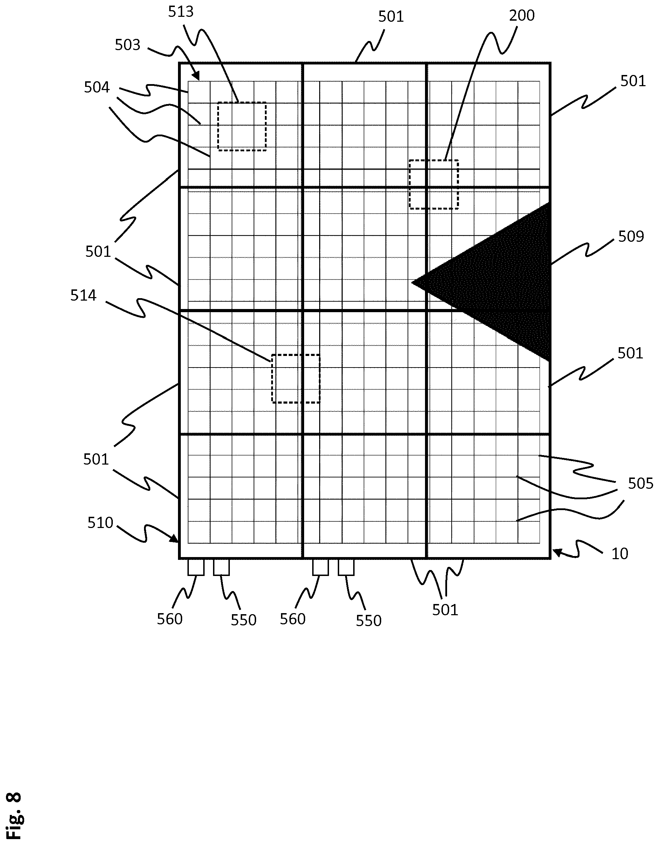

Fig. 8 zeigt in einer schematischen Darstellung einen Ausschnitt auf die Antriebsfläche 510 mit den Movern 200 und den weiteren Movern 513, 514 und dem Objekt 509 gemäß Fig. 7, wobei jedoch der Graph 503 eine andere Rasterung aufweist. In dieser Ausführungsform weist der fiktive Graph 503 Kanten 504 und Knoten 505 auf, die Maschen mit einem Rechteckmuster bilden. An Überschneidungspunkten der Kanten 504 ist jeweils ein Knoten 505 angeordnet. Abhängig von der gewählten Ausführungsform kann der Graph 503 auch andere Formen, insbesondere andere Maschen aufweisen. Beispielsweise muss der Graph 503 nicht eine gesamte Antriebsfläche 510 überdecken, sondern kann nur einzelne Flächenbereiche der Antriebsfläche 510 überdecken. Zudem kann der Graph 503 gemäß einer hier nicht dargestellten Ausführungsform in verschiedenen Bereichen der Antriebsfläche unterschiedliche Dichten an Kanten 504 und/oder Knoten 505 und/oder unterschiedliche mittlere Längen an Kanten 504 aufweisen.

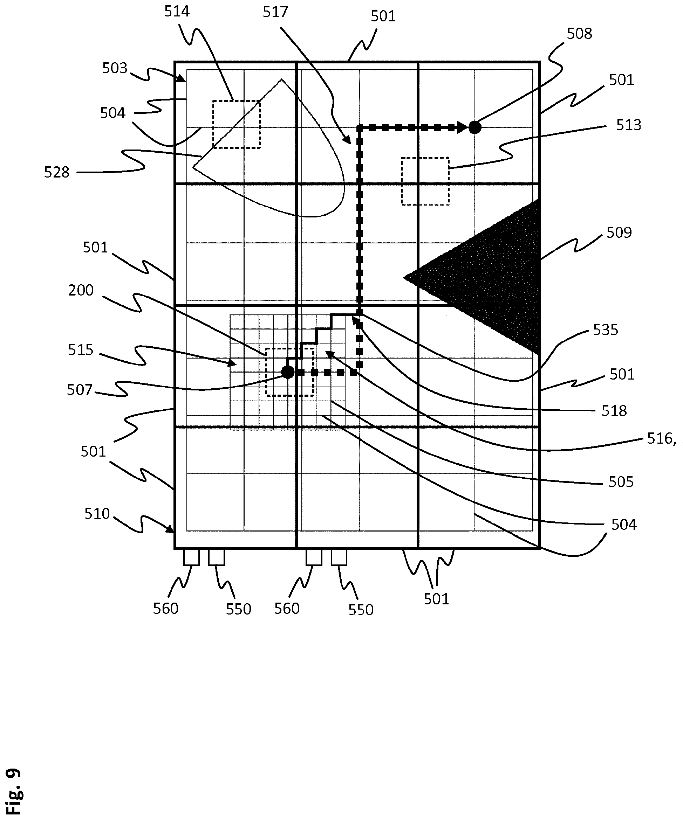

Fig. 9 zeigt in einer schematischen Darstellung eine weitere Ansicht auf eine Antriebsfläche 510, wobei der fiktive Graph 503 in der hier dargestellten Ausführungsform in einem Umfeld 515 um den Mover 200 eine höhere Dichte an Kanten 504 und Knoten 505 als außerhalb des Umfeldes 515 aufweist. Das Umfeld 515 ist in der dargestellten Ausführungsform als quadratische Fläche ausgebildet, in dessen Mittelpunkt sich der Mover 200 befindet. In dem dargestellten Ausführungsbeispiel weist der Graph 503 außerhalb des Umfeldes 515 nur ein Fünftel der Kanten 504 und entsprechend weniger Knoten 505 im Vergleich zum Umfeld 515 auf. Zudem ist die mittlere Länge der Kanten 504 im Umfeld 515 kleiner als außerhalb des Umfeldes 515.

Somit ist innerhalb des Umfeldes 515 eine genauere Planung des Pfades im Vergleich zu dem Bereich außerhalb des Umfeldes 515 möglich. Weiterhin kann ein zweites Umfeld vorgesehen sein, das das Umfeld 515 umgibt, wobei außerhalb des zweiten Umfeldes die Dichte der Kanten 504 und/oder der Knoten 505 und/oder die mittlere Länge der Kanten 504 des Graphen 503 abnimmt.

Zudem kann in einer weiteren, nicht dargestellten Ausführungsform die Dichte der Kanten 504 und Knoten 505 des Graphen 503 mit zunehmender Entfernung von der aktuellen Position des Movers 200 stufenweise oder graduell abnehmen.

Für die Pfadplanung ermittelt die Steuereinheit zuerst für den Mover 200 vom Startpunkt 507, der der aktuellen Position des Movers 200 entspricht, bis zu dem vorgegebenen Zielpunkt 508 einen ersten Pfadabschnitt 517, der schematisch in Form einer punktierten Linie eingezeichnet ist. Der erste Pfadabschnitt 517 wird anhand des größeren Rasters des Graphen 503 außerhalb des Umfeldes 515 ermittelt. Für die Planung des ersten Pfadabschnittes 517 wird das größere Raster des Graphen 503 auch für den Bereich innerhalb des Umfeldes 515 angewendet.

Dann ermittelt die Steuereinheit nach vorgegebenen Regeln ein Zwischenziel 535 für einen zweiten Pfadabschnitt 516, wobei das Zwischenziel 535 Teil des ersten Pfadabschnittes 517 ist und möglichst nahe, aber außerhalb des Umfeldes 515 angeordnet ist. Zudem soll das Zwischenziel 535 so gewählt werden, dass damit ein möglichst kurzer Pfad zum Zielpunkt 508 ermöglicht wird. Die Steuereinheit ermittelt dann ausgehend vom Startpunkt 507, der der aktuellen Position des Movers 200 entspricht, bis zu dem Zwischenziel innerhalb des Umfeldes 515 einen zweiten Pfadabschnitt 516 gemäß den Maschen des Graphen 503 innerhalb des Umfeldes 515 möglichst nahe an das Zwischenziel 535. Ein Ende des zweiten Pfadabschnittes 516 wird über einen Überbrückungsabschnitt 518 mit dem Zwischenziel 535 auf möglichst kurzem Wege verbunden. Der erste Pfadabschnitt 517 und der Überbrückungsabschnitt 518 sind in Form einer breiteren Linie schematisch dargestellt.

Bei der Ermittlung der Pfadplanung werden sowohl das Objekt 509 als auch die als Hindernis wirkenden weiteren ersten und zweiten Mover 513, 514 berücksichtigt. Die Berücksichtigung des Objektes 509 und der weiteren ersten und zweiten Mover 513, 514 erfolgt z.B. über eine entsprechende Gewichtung der Kanten 504 des Graphen 503, die durch die Hindernisse führen oder in einem so engen Abstand zu den Hindernissen ausgebildet sind, dass eine Berührung zwischen dem Mover 200 und dem Hindernis oder dem weiteren ersten und/oder zweiten Mover 513, 514 die Folge wäre.

Die Steuereinheit kann ausgebildet sein, um in vorgebbaren Zeitzyklen die Pfadplanung zwischen der aktuellen Position des Movers 200 und dem Zielpunkt 508 immer wieder durchzuführen, bis der Mover 200 am Zielpunkt 508 angekommen ist. Dabei bewegt sich das Umfeld 515 mit dem Mover 200 mit. Nach jeder Pfadplanung wird von der Steuereinheit 506 die Dynamikplanung durchgeführt und anschließend werden die Magnetfelderzeuger der Sektoren 501 so bestromt, dass der Mover 200 entlang dem ersten Pfadabschnitt 516 als Teil eines Pfades 511 bewegt wird. Die vorgebbaren Zeitzyklen sind beispielsweise so kurz gewählt, dass vor Erreichen eines Endes des ersten Pfadabschnittes 516 erneut eine Pfadplanung mit einem Umfeld 515 um die aktuelle Position des Movers 200 durchgeführt wird, so dass sich der Mover 200 immer nur auf einem genauer berechneten ersten Pfadabschnitt 516 bewegt wird.

Abhängig von der gewählten Ausführungsform kann es jedoch auch vorkommen, dass vor dem erneuten Berechnen des Pfades der Mover 200 wenigstens über den Überbrückungsabschnitt 518 und über einen Teilabschnitt des zweiten Pfadabschnittes 517 bewegt wird. Mithilfe des ersten Pfadabschnittes 516 wird eine Nahplanung und mithilfe des zweiten Pfadabschnittes 517 eine Fernplanung ausgeführt. Abhängig von der gewählten Ausführungsform kann die Steuereinheit 506 ausgebildet sein, die Dynamikplanung immer nur bis zum Ende des ersten Pfadabschnittes 516 auszuführen. Dies ist dann hilfreich, wenn vor Erreichen des Endes des ersten Pfadabschnittes 516 erneut eine Pfadplanung mit einem neuen ersten Pfadabschnitt 516 durchgeführt wird. Auf diese Weise kann Rechenzeit eingespart werden. Die vorgebbaren Zeitzyklen können beispielsweise in einem Bereich von 100µs bis 400µs liegen.

Abhängig von der gewählten Ausführungsform kann eine zukünftige Bewegungsbahn 528, auf der sich der weitere Mover 514 bewegen wird, bei der Pfadplanung in der Weise berücksichtigt werden, dass die Gewichtung der Kanten, die im Bereich der zukünftigen Bewegungsbahn 528 des weiteren zweiten Movers 514 liegen, eine für die Pfadplanung negative Gewichtung erhalten. Beispielsweise können die Kanten in einem vorgegebenen Umfeld der zukünftigen Bewegungsbahn 528 des weiteren zweiten Movers 514 eine höhere Gewichtung erhalten. Zudem kann auch eine zukünftige Bewegungsbahn des Weiteren ersten Movers 513 bei der Pfadplanung analog berücksichtigt werden.

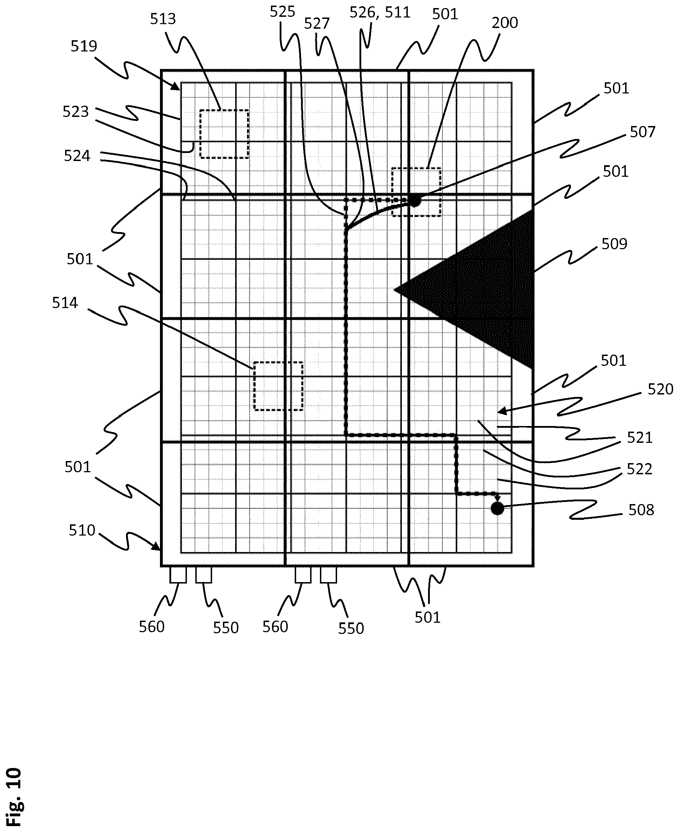

Fig. 10 zeigt in einer schematischen Darstellung eine Antriebsfläche 510 mit Sektoren 501, wobei ein fiktiver erster Graph 519 und ein fiktiver zweiter Graph 520 dargestellt sind. Der erste Graph 519 ist in Form von dickeren Linien, in einem rechtwinkligen Raster angeordneten ersten Kanten 523 dargestellt, die sich an ersten Knoten 524 kreuzen. Der zweite Graph 520 ist in Form von dünneren Linien mit in einem ebenfalls rechtwinkligen Raster angeordneten zweiten Kanten 521 dargestellt, wobei sich die zweiten Kanten 521 an zweiten Knoten 522 kreuzen. Beim ersten Graphen 519 weisen die parallel angeordneten ersten Kanten 523 einen größeren Abstand zueinander auf als die zweiten Kanten 521 des zweiten Graphen 520. Somit weist der erste Graph 519 einer geringen Dichte an ersten Knoten 524 und/oder ersten Kanten 523 als der zweite Graph 520 auf. Somit bietet der zweite Graph 520 eine genauere Planung des optimierten Pfades als der erste Graph 519. Zwei benachbarte erste Kanten 523 weisen einen vierfachen Abstand im Vergleich zu zwei benachbarten zweiten Kanten 521 auf. Abhängig von der gewählten Ausführungsform können auch andere Größenunterschiede für die ersten und zweiten Graphen 519, 520 verwendet werden. Der erste Graph 519 weist eine geringere Dichte an Knoten 505 und/oder Kanten 504 als der zweite Graph 520 auf. Zudem können sich auch die Maschen der Graphen 519, 520 nicht nur in der Größe, sondern auch in der Form unterscheiden.

Es soll nun für den Mover 200 eine Pfadplanung zum Zielpunkt 508 ausgeführt werden, wobei sich der Zielpunkt 508 in dem rechten untersten Sektor 501 befindet.

Die Steuereinheit ist ausgebildet, die Pfadplanung von einem Startpunkt 507 zu einem Zielpunkt 508 in zwei Planungsebenen auszuführen. Es ist eine erste Planungsebene mit dem ersten Graphen 519 und eine zweite Planungsebene mit dem zweiten Graphen 520 vorgesehen.

Die Steuereinheit führt anhand des ersten Graphen 519 eine erste Pfadplanung vom Startpunkt 507 bis zum Zielpunkt 508 durch. Dabei wird beispielsweise ein erster Pfad 525 ermittelt, der schematisch in Form einer punktierten Linie eingezeichnet ist.

Zudem führt die Steuereinheit anhand des zweiten Graphen 520 eine zweite Pfadplanung ein zweiter Pfad 526 vom Startpunkt 507 zu einem Zwischenziel 207 auf dem ersten Pfad 525. Der zweite Pfad 526 ist schematisch als breitere Linie in dem zweiten Graphen 520 eingezeichnet. Der zweite Pfad 526 ist quer über die Maschen des zweiten Graphen 520 geführt.

Die Steuereinheit berücksichtigt für die abschließende Pfadplanung sowohl den ersten Pfad 525 als auch den zweiten Pfad 526.

Für eine effiziente Planung verwendet die Steuereinheit in der zweiten Pfadplanung einen gemeinsamen Knoten 527 zwischen dem ersten Graphen 519 und dem zweiten Graphen 520, der auf dem ersten Pfad 525 der ersten Pfadplanung liegt, als Zwischenziel für die zweite Pfadplanung. Es wird der gemeinsame Knoten 527 des ersten Pfades 525 ausgewählt, der gemäß einer Strategie für die zweite Pfadplanung am günstigsten erreicht werden kann. Dazu ist es erforderlich, dass die erste Pfadplanung weiter voraus in Richtung auf den Zielpunkt 508 berechnet ist als die zweite Pfadplanung. Nur dann kann die zweite Pfadplanung einen gemeinsamen Knoten 527 als Zwischenziel verwenden. Auf diese Art und Weise wird sukzessive die zweite Pfadplanung und damit der zweite Pfad 526 in Richtung auf den Zielpunkt 508 ermittelt. Beispielsweise wird die zweite Pfadplanung sukzessive in vorgegebenen Zeitabständen abhängig von der aktuellen Position des Movers 200 als neuen Startpunkt 507 in Richtung auf den Zielpunkt 508 berechnet. Dabei sind die Zeitpunkte in der Weise gewählt, dass der Mover 200 tatsächlich immer nur auf dem zweiten Pfad 526 bewegt wird und der erste Pfad 525 nur als grobe Orientierung für die weitere Planung des zweiten Pfades 526 verwendet wird.

Auch die erste und die zweite Pfadplanung werden in vorgegebenen Zeitabständen wiederholt und abhängig von der aktuellen Position des Movers 200 wird zyklisch der zweite Pfad 526 in Richtung auf den Zielpunkt 508 ermittelt. Nach Ermittlung des zweiten Pfades 526 wird eine Dynamikplanung gemäß dem zweiten Pfad 526 für den Mover 200 ausgeführt und die Magnetfelderzeuger werden von der Steuereinheit entsprechend angesteuert, dass sich der Mover 200 entlang des zweiten Pfades 526 als Teil des Pfades bewegt.

Abhängig von der gewählten Ausführungsform können bei nicht dargestellten Ausführungsformen auch mehr als zwei Planungsebenen mit Graphen mit verschiedenen Dichten von Kanten und/oder Knoten verwendet werden. Die Planungsebene mit der geringeren Auflösung plant den ungefähren langfristigen Pfad auf einer groben Gitterstruktur mit Kanten und Knoten. Die unterlagerte Planungsebene mit der höheren Auflösung plant von der aktuellen Position des Movers auf einem feineren Gitter mit Kanten und Knoten für einen vorgegebenen Zeithorizont einen detaillierten Pfad bis zu einem ausgewählten gemeinsamen Knoten mit dem Graphen der überlagerten Planungsebene.

Zudem können die Graphen in den wenigstens zwei Planungsebenen auch unterschiedliche Grundstrukturen aufweisen.

Grundsätzlich kann der Informationsfluss von der Pfadplanung mit dem gröberen Graphen, das heißt mit der kleineren Dichte an Kanten und/oder Knoten, der Pfadplanung mit dem genaueren Graphen übermittelt werden. Eine Dynamikplanung wird beispielsweise aufgrund des Pfades ermittelt, die durch den Graphen mit der höchsten Dichte an Kanten und/oder Knoten und/oder der kleinsten mittleren Länge der Kanten festgelegt wurde.

In einer weiteren nicht dargestellten Ausführungsform kann es zweckmäßig sein, dass die Dynamikplanung der Pfadplanung eine Rückmeldung über die durch die Pfadplanung verursachten Randbedingungen für die Dynamikplanung gibt. Beispielsweise kann der ermittelte zweite Pfad Nachteile für die Dynamikplanung beinhalten. Beispielsweise kann eine maximal mögliche Geschwindigkeit des Movers aufgrund der Form des zweiten Pfades nur bis zu einem gewissen Prozentsatz als mittlere Geschwindigkeit umgesetzt werden. Zudem kann z. B. der zweite Pfad für die Dynamikplanung einen hohen Stromverbrauch für die Ansteuerung der Magnetfelderzeuger beinhalten. Beispielsweise kann der zweite Pfad eine hohe Anzahl von hohen Beschleunigungen und/oder Abbremsungen des Movers erfordern. Die negativen Auswirkungen können von der zweiten Pfadplanung berücksichtigt werden und/oder an die erste Pfadplanung übermittelt werden. Somit kann auch die erste Pfadplanung bei einer weiteren ersten Pfadplanung versuchen, negative Auswirkungen auf die Dynamikplanung durch eine entsprechende Pfadplanung zu vermeiden.

Abhängig von der gewählten Ausführungsform können die erste Pfadplanung und die zweite Pfadplanung in verschiedenen Zeitzyklen arbeiten.

Die vorgeschlagene Entkopplung in wenigstens zwei Planungsebenen für die Pfadplanung bietet den Vorteil, dass die zwei Planungsebenen unabhängig voneinander ausgeführt werden können. Dadurch können beispielsweise die zwei Planungsebenen einfach auf zwei getrennte Programme und/oder auf zwei getrennte Steuereinheiten verteilt werden.

Die Position des Movers, der weiteren Mover und/oder die Bewegungsbahnen des Movers und/oder der weiteren Mover können von der Steuereinheit 506 über entsprechende Positionssensoren 560 erfasst und beispielsweise aufgrund der vorliegenden Geschwindigkeit und/oder Beschleunigung und der Bewegungsrichtung abgeschätzt werden.

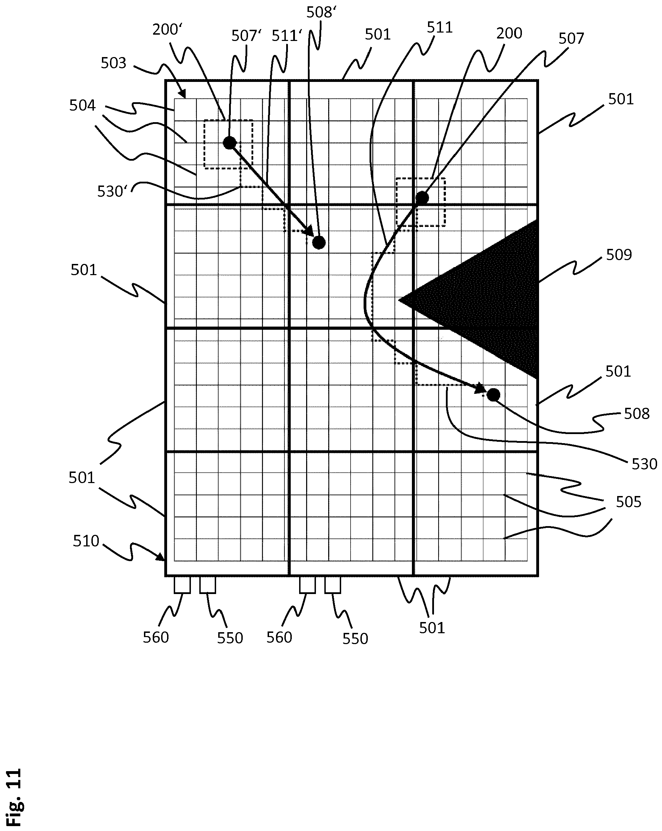

**Fig. 11** zeigt in einer schematischen Darstellung einen Ausschnitt auf die Antriebsfläche 510 mit einem fiktiven Graphen 503 gemäß Fig. 8. Es sind ein Mover 200 und ein weiterer Mover 200' dargestellt. Der fiktive Graph 503 weist Kanten 504 und Knoten 505 auf, die Maschen mit einem Rechteckmuster bilden. An Überschneidungspunkten der Kanten 504 ist jeweils ein Knoten 505 angeordnet.

Die Steuereinheit 506 ist ausgebildet, um für den Mover 200 abhängig von einem Startpunkt 507 eine Pfadplanung zu einem Zielpunkt 508 auszuführen. Der Startpunkt 507 kann die aktuelle Position des Movers 200 sein. Zudem kann abhängig von der gewählten Ausführungsform der Startpunkt 507 auch unabhängig von der aktuellen Position des Movers 200 vorgegeben sein. Der Zielpunkt 508 befindet sich in dem beschriebenen Ausführungsbeispiel in einer Masche des Graphen 503 im rechten unteren Sektor 501. Als Startpunkt 507 wird ein Knoten 505 nahe dem Mittelpunkt des Movers 200 angenommen. In diesem Beispiel ermittelt die Steuereinheit zuerst anhand der Kanten und Knoten einen vorläufigen Pfad 530 vom Startpunkt 507 zum Zielpunkt 530. Der vorläufige Pfad 530 ist als gestrichelte Linie eingezeichnet. Nach oder während der Ermittlung des vorläufigen Pfades 530 wird der vorläufige Pfad 530 nach vorgegebenen Regeln zu einem Pfad 511 geglättet, um z. B. zu starke Richtungsänderungen vermeiden. Beispielsweise können Abschnitte des vorläufigen Pfades 530, die einen Krümmungsradius unter einem vorgegebenen Grenzwert aufweisen, in der Weise angepasst werden, dass die Krümmungsradien über dem Grenzwert liegen.

Anschließend verwendet die Steuereinheit den geglätteten Pfad 511 für die Dynamikplanung und für die Ansteuerung der Magnetfelderzeuger der Sektoren, um den Mover 200 entlang des Pfades 511 zum Zielpunkt zu bewegen.

Zudem können bei diesem Verfahren auch die weiteren Aspekte des Verfahrens verwendet werden, die anhand von Fig. 7 beschrieben wurden. Insbesondere können die Kanten 504 oder wenigstens Teile von Kanten 504 zwischen zwei Knotenpunkten 505 eine Gewichtung aufweisen, die bei der Pfadplanung berücksichtigt werden.

Die Steuereinheit 506 ist zudem ausgebildet, um für den weiteren Mover 200' abhängig von einem weiteren Startpunkt 507' eine weitere Pfadplanung zu einem weiteren Zielpunkt 508' auszuführen. Der weitere Startpunkt 507' ist die aktuelle Position des weiteren Movers 200'. Der weitere Zielpunkt 508' befindet sich in dem beschriebenen Ausführungsbeispiel in einer Masche des Graphen 503 in einem Sektor 501. Als Startpunkt 507 wird ein Knoten 505 nahe dem Mittelpunkt des Movers 200 angenommen. In diesem Beispiel ermittelt die Steuereinheit zuerst anhand der Kanten 504 und Knoten 505 einen vorläufigen weiteren Pfad 530' vom weiteren Startpunkt 507' zum weiteren Zielpunkt 530'. Der vorläufige weitere Pfad 530' ist als gestrichelte Linie eingezeichnet. Nach oder während der Ermittlung des vorläufigen weiteren Pfades 530' wird der vorläufige weitere Pfad 530' nach vorgegebenen Regeln zu einem weiteren Pfad 511' geglättet. Beispielsweise können Abschnitte des vorläufigen weiteren Pfades 530' zu einer Geraden geglättet werden.

Anschließend verwendet die Steuereinheit den geglätteten weiteren Pfad 511' für die Dynamikplanung und für die Ansteuerung der Magnetfelderzeuger der Sektoren, um den weiteren Mover 200' entlang des weiteren Pfades 511' zum weiteren Zielpunkt 508' zu bewegen.

Zudem können bei diesem Verfahren auch die weiteren Aspekte des Verfahrens verwendet werden, die anhand von Fig. 7 beschrieben wurden. Insbesondere können die Kanten 504 oder wenigstens Teile von Kanten 504 zwischen zwei Knotenpunkten 505 eine Gewichtung aufweisen, die bei der Pfadplanung berücksichtigt werden.

Wie bereits erläutert, muss die Pfadplanung nicht zwangsläufig entlang der Kanten 504 und Knoten 505 stattfinden, sondern kann nach entsprechender Glättung innerhalb einer Masche der Rasterung des Graphen 503 erfolgen. Je feiner die Rasterung des Graphen 503 ist, desto feiner ist die Pfadplanung. Die aufgrund der Kanten 504 ermittelten vorläufigen Pfade 530, 530' mit dem treppenförmigen Verlauf stellen nicht unbedingt einen optimalen Pfad dar.

Grundsätzlich kann es für die Dynamikplanung wichtig sein, dass der Pfad so wenig wie möglich abrupte Richtungsänderungen, d. h. Ecken aufweist, da jede abrupte Richtungsänderung ein Anhalten oder Abbremsen des Movers an dieser Stelle erfordert. Wenn der Pfad exakt auf den Kanten verläuft, lassen sich solche abrupten Richtungsänderungen häufig nicht vermeiden. Daher ist es oft von Vorteil, wenn der Pfad von den Kanten abweicht. Dafür gibt es z.B. zwei Glättungsverfahren:
- Es wird ein hybrider Graphen-Algorithmen für die Pfadplanung verwendet, die den Graphen in der Planung berücksichtigen, aber gleichzeitig schon Abweichungen von den Kanten nutzt, um Ecken zu vermeiden. Dies ist ein sogenannter Hybrid A* Algorithmus. Ein entsprechendes Verfahren ist aus "Application of Hybrid A to an autonomous mobile robot for planning in unstructured outdoor environments" von Janke Petereit et. al. bekannt.
- In einem ersten Schritt kann ein reiner Graphen-Algorithmus verwendet werden, der einen Pfad exakt entlang der Kanten plant. In einem weiteren Schritt wird dann ein Glättungsverfahren auf den Pfad angewendet, das im Wesentlichen die Ecken des Pfades abrundet. Dabei kann beispielsweise vorgegeben werden, wie weit der so generierte Pfad vom ursprünglichen Pfad entlang der Kanten abweichen darf.

In einer weiteren nicht dargestellten Ausführungsform kann eine quadratische Rasterung mit 3 verschieden gerasterten Graphen, d.h. mit drei Abstufungen, verwendet werden. Die Graphen weisen Kanten mit Knoten auf, die Gitter mit quadratischen Gitterstrukturen bilden, wobei die Knoten die Kreuzungspunkte der Gitterstrukturen festlegen. Jede Kantenlänge der drei Graphen ist dabei ein ganzzahliger Teiler der Länge der Sektoren. Die Sektoren weisen quadratische Formen auf, wobei alle Sektoren gleich groß sind. Durch diese Wahl sind die möglichen Knotenpunkte der Gitterstrukturen der drei Gitter auf jedem Sektor an denselben Positionen. Dadurch wird vermieden, dass mögliche Hardware-bedingte Schwankungen der verfügbaren Kraft auf den Mover als Funktion der Position auf einem Sektor sich auf die Bewegungsplanung auf verschiedenen Sektoren verschieden auswirken.

Es wird ein dritter Graph für ein Nahfeld verwendet, das direkt an den Mover angrenzt und den Mover umgibt. Der dritte Graph weist ein Gitter mit einer konstanten Kantenlänge von z.B. 1,2mm auf. Die Länge und Breite der Sektoren beträgt 240mm. Der dritte Graph wird für die Pfadplanung für einen Bereich von bis zu 12mm Entfernung um die aktuelle Position des Movers verwendet. Die Entfernung von 12mm kann der Strecke entsprechen, die der Mover innerhalb von drei Echtzeitzyklen bei einer festgelegten maximalen Geschwindigkeit bewegt wird. Der dritte Graph wird z. B. benötigt, um Zielpunkte mit hoher Präzision anzufahren, und um die unmittelbar anstehende Bewegung in den nächsten 2 bis 3 Zeitzyklen optimal zu gestalten.

Es wird ein zweiter Graph für ein Mittelfeld verwendet, wobei das Mittelfeld das Nahfeld und einen weiter entfernten Bereich um den Mover umfasst. Der zweite Graph weist ein Gitter mit einer Kantenlänge von z. B. 12mm auf. Der zweite Graph wird beispielsweise für eine Pfadplanung in einem Bereich von bis zu 120mm Entfernung zur aktuellen Position des Movers verwendet. Die Entfernung von 120mm kann der Strecke entsprechen, die der Mover innerhalb von 30 Zeitzyklen bei festgelegter maximaler Geschwindigkeit bewegt wird. Der zweite Graph kann insbesondere dazu genutzt werden, um Kollisionen zwischen Movern zu vermeiden und für die nächsten 30-100 Zeitzyklen, abhängig von der maximalen Geschwindigkeit des Movers, eine präzisere Pfadplanung als für ein Fernfeld zu ermöglichen.

Es wird ein erster Graph für ein Fernfeld verwendet, wobei das Fernfeld das Mittelfeld und einen weiter entfernten Bereich umfasst. Der erste Graph weist ein Gitter mit Kantenlängen von 120mm auf. Der erste Graph kann z.B. verwendet werden, um eine Pfadplanung für eine unbegrenzte Entfernung, d. h. bis zum Zielpunkt durchzuführen. Der erste Graph wird z. B. verwendet, um den kürzesten Weg von der aktuellen Position des Movers bis zu einem Zielpunkt zu finden, insbesondere wenn der Zielpunkt weit über 120mm entfernt ist.

Abhängig von der gewählten Ausführungsform können auch mehr Graphen auch mit anderen Gitterstrukturen für die Pfadplanung der Mover verwendet werden.

### Bezugszeichenliste

- 1: Planarantriebssystem
- 8: Oberseite
- 9: Unterseite
- 10: Statormodul
- 11: Statorfläche
- 12: erste Richtung
- 14: zweite Richtung
- 15: vertikale Richtung
- 18: Anschlussleitung
- 19: Modulgehäuse
- 30: Außenkante der Statorfläche
- 100: Statoreinheit
- 104: erste Statorlage
- 105: zweite Statorlage
- 106: dritte Statorlage
- 107: vierte Statorlage
- 110: erster Statorsektor
- 112: dritter Statorsektor
- 113: zweiter Statorsektor
- 114: vierter Statorsektor
- 120: erste Statorsegmente
- 121: zweite Statorsegmente
- 125: Leiterstreifen
- 126: weitere Leiterstreifen
- 127: Leiterbahnen
- 200: Mover
- 200': weiterer Mover
- 201: Magnetanordnung
- 206: erste Läuferrichtung
- 208: zweite Läuferrichtung
- 210: erste Magneteinheit
- 211: Antriebsmagnet
- 220: zweite Magneteinheit
- 221: weiterer Antriebsmagnet
- 230: dritte Magneteinheit
- 240: vierte Magneteinheit
- 501: Sektor
- 503: Graph
- 504: Kante
- 505: Knoten
- 506: Steuereinheit
- 507: Startpunkt
- 507': weiterer Startpunkt
- 508: Zielpunkt
- 508': weiterer Zielpunkt
- 509: Objekt
- 510: Antriebsfläche
- 511: Pfad
- 511': weiterer Pfad
- 512: Datenspeicher
- 513: weiterer erster Mover
- 514: weiterer zweiter Mover
- 515: Umfeld
- 516: zweiter Pfadabschnitt
- 517: erster Pfadabschnitt
- 518: Überbrückungsabschnitt
- 519: erster Graph
- 520: zweiter Graph
- 521: zweite Kanten
- 522: zweite Knoten
- 523: erste Kanten
- 524: erste Knoten
- 525: erster Pfad
- 526: zweiter Pfad
- 527: gemeinsamer Knoten
- 528: Bewegungsbahn
- 530: vorläufiger Pfad
- 530': weiterer vorläufiger Pfad
- 535: Zwischenziel
- 550: Temperatursensor
- 560: Positionssensor

## Patentansprüche

1. Vorrichtung zum Antreiben wenigstens eines Movers (200, 200') auf einer Antriebsfläche (510), wobei der Mover (200, 200') wenigstens einen zweiten Magnetfelderzeuger (250) aufweist, wobei die Antriebsfläche (510) mehrere plattenförmige Sektoren (501) aufweist, wobei die Sektoren (501) Magnetfelderzeuger (127) aufweisen, wobei die Sektoren (501) mit einer Steuereinheit (506) verbunden sind, wobei die Steuereinheit (506) ausgebildet ist, um über eine entsprechende Steuerung einer Stromversorgung der Magnetfelderzeuger (127) der Sektoren (501) Magnetfelder in der Weise zu erzeugen, dass der Mover (200, 200') wenigstens in einer Richtung über die Antriebsfläche (510) bewegbar ist, wobei die Steuereinheit (506) ausgebildet ist, um eine Pfadplanung für den Mover (200, 200') von einem Startpunkt (507, 507') zu einem Zielpunkt (508, 508') auszuführen, wobei die Steuereinheit (506) ausgebildet ist, die Magnetfelderzeuger (127) der Sektoren (501) in der Weise mit Strom anzusteuern, dass der Mover (200, 200') entlang des ermittelten Pfades 511, 511' über die Antriebsfläche (510, 10) bewegbar ist,
**dadurch gekennzeichnet, dass**
die Steuereinheit (506) ausgebildet ist, für die Pfadplanung wenigstens einen Graphen (503, 519, 520) mit Knoten (505, 522, 524) und Kanten (504, 523, 521) zu verwenden, wobei der Graph (503, 519, 520) in einem vorgegebenen Umfeld (515) um die Position des Movers (200, 200') eine größere Dichte an Kanten (504, 521, 523) und/oder eine größere Dichte an Knoten (505, 522, 524) und/oder eine kleinere mittlere Länge der Kanten (504, 521, 523) aufweist als außerhalb des Umfelds (515).

2. Vorrichtung nach Anspruch 1, wobei wenigstens einem Teil der Kanten (504, 521, 523) eine Gewichtung zugeordnet ist, und wobei die Steuereinheit (506) bei einer Pfadplanung die Gewichtung berücksichtigt, wobei die Gewichtung einer Kante (504, 521, 523) von der Länge der Kante (504, 521, 523) oder von einer maximalen Geschwindigkeit des Movers (200, 200') beim Befahren der Kante (504, 521, 523) abhängt, und/ oder wobei die Gewichtung wenigstens von der Temperatur des Sektors (501), insbesondere von der Temperatur zumindest eines Magnetfelderzeugers (127) des Sektors (501) abhängt.

3. Vorrichtung nach einem der vorhergehenden Ansprüche, wobei die Steuereinheit (506) die Pfadplanung in vorgebbaren Zeitzyklen wiederholt durchführt.

4. Vorrichtung nach einem der vorhergehenden Ansprüche, wobei die Steuereinheit (506) die Pfadplanung in zwei Planungsebenen ausführt, wobei in einer ersten Planungsebene eine erste Pfadplanung mit zumindest einem ersten Graphen (519) ausgeführt wird und ein erster Pfad (525) ermittelt wird, wobei in einer zweiten Planungsebene eine zweite Pfadplanung mit zumindest einem zweiten Graphen (520) durchgeführt wird und ein zweiter Pfad (526) ermittelt wird, wobei der erste Graph (519) eine kleinere Dichte an Knoten (505, 522, 524) und/oder Kanten (504, 521, 523) als der zweite Graph (520) aufweist, und wobei die Steuereinheit (506) beide Pfadplanungen für die Pfadplanung des Movers (200, 200') berücksichtigt.

5. Vorrichtung nach Anspruch 4, wobei der erste Graph (519) und der zweite Graph (520) wenigstens einen gemeinsamen Knoten (527) aufweisen, wobei von der Steuereinheit (506) für die zweite Pfadplanung in der zweiten Planungsebene der gemeinsame Knoten (527) berücksichtigt wird, der auf dem ersten Pfad (525) liegt, und wobei die Steuereinheit (506) den gemeinsamen Knoten (527), der auf dem ersten Pfad (525) liegt, als Ziel für die zweite Pfadplanung verwendet.

6. Vorrichtung nach Anspruch 4 oder 5, wobei die Steuereinheit (506) die erste Pfadplanung gegenüber der zweiten Pfadplanung voraus berechnet, so dass die Steuereinheit (506) gemeinsame Knoten (527), die auf dem ersten Pfad (525) liegen, für die zweite Pfadplanung berücksichtigen kann.

7. Vorrichtung nach einem der vorhergehenden Ansprüche, wobei die Steuereinheit (506) ausgebildet ist, aufgrund des geplanten Pfades (511, 511') eine Dynamikplanung für die Beschleunigung und/oder die Geschwindigkeit des Movers (200, 200') auszuführen, um die entsprechend dem geplanten Pfad (511, 511') notwendigen Magnetfelderzeuger (127) der Sektoren (101) entsprechend anzusteuern.

8. Verfahren zum Antreiben wenigstens eines Movers, wobei der Mover (200, 200') wenigstens eine Vorrichtung (1, 501) zum Erzeugen eines Magnetfeldes, insbesondere zumindest einen Magneten, aufweist, wobei der Mover (200, 200') auf einer Antriebsfläche (510) mit mehreren Sektoren (501) bewegbar ist, wobei die Sektoren (501) Magnetfelderzeuger (127) zum Erzeugen von zumindest einem Magnetfeld aufweisen, wobei eine Pfadplanung für den Mover (200, 200') von einem Startpunkt (507, 507') zu einem Zielpunkt (508, 508') auf der Antriebsfläche (510) ausgeführt wird,
**dadurch gekennzeichnet, dass**
für die Pfadplanung wenigstens ein Graph (503, 519, 520) mit Knoten (505, 522, 524) und Kanten (504, 523, 521) verwendet wird, wobei der Graph (503, 519, 520) in einem vorgegebenen Umfeld (515) um die Position des Movers (200, 200') eine größere Dichte an Kanten (504, 521, 523) und/oder eine größere Dichte an Knoten (505, 522, 524) und/oder eine kleinere mittlere Länge der Kanten (504, 521, 523) aufweist als außerhalb des Umfelds (515).

9. Verfahren nach Anspruch 8, wobei wenigstens einem Teil der Kanten (504, 523, 521) eine Gewichtung zugeordnet ist, wobei die Gewichtung der Kante (504, 523, 521) angibt, wie vorteilhaft die Kante (504, 523, 521) für die Pfadplanung ist, und wobei bei einer Pfadplanung die Gewichtung berücksichtigt wird, wobei die Gewichtung der Kante (504, 523, 521) von der Länge der Kante (504, 523, 521) oder von einer maximal möglichen Geschwindigkeit des Movers (200, 200') beim Befahren der Kante (504, 523, 521) abhängt, und /oder wobei die Gewichtung der Kante (504, 523, 521) von wenigstens einer Temperatur eines Sektors (501) abhängt, über den die Kante (504, 523, 521) führt, wobei insbesondere die Gewichtung von einer Temperatur wenigstens eines Magnetfelderzeugers (127) des Sektors (501) abhängt.

10. Verfahren nach Anspruch 8 oder 9, wobei die Pfadplanung in vorgebbaren Zeitzyklen wiederholt durchgeführt wird.

11. Verfahren nach einem der Ansprüche 8 bis 10, wobei die Pfadplanung in zwei Planungsebenen ausgeführt wird, wobei in einer ersten Planungsebene eine erste Pfadplanung mit einem ersten Graphen (519) ausgeführt wird und ein erster Pfad (525) ermittelt wird, wobei in einer zweiten Planungsebene eine zweite Pfadplanung mit einem zweiten Graphen (520) durchgeführt wird und ein zweiter Pfad (526) ermittelt wird, wobei der erste Graph (519) eine kleinere Dichte an Knoten (505, 522, 524) und/oder Kanten (504, 523, 521) und/oder eine kleinere mittlere Länge der Kanten (504, 523, 521) als der zweite Graph (520) aufweist, und wobei beide Pfadplanungen für die Pfadplanung des Movers berücksichtigt werden.

12. Verfahren nach Anspruch 11, wobei der erste Graph (519) und der zweite Graph (520) wenigstens einen gemeinsamen Knoten (505, 522, 524) aufweisen, wobei für die zweite Pfadplanung in der zweiten Planungsebene ein gemeinsamer Knoten (505, 522, 524) berücksichtigt wird, der auf dem ersten Pfad liegt, und wobei der gemeinsame Knoten (505, 522, 524), der auf dem ersten Pfad (519) liegt, als Ziel für die zweite Pfadplanung verwendet wird.

13. Verfahren nach Anspruch 11 oder 12, wobei die erste Pfadplanung gegenüber der zweiten Pfadplanung voraus berechnet wird, wobei für die zweite Pfadplanung gemeinsame Knoten (505, 522, 524), die auf dem ermittelten ersten Pfad (525) liegen, bei der zweiten Pfadplanung berücksichtigt werden.

14. Verfahren nach einem der Ansprüche 8 bis 13, wobei aufgrund des geplanten Pfades (511, 511') eine Dynamikplanung für die Geschwindigkeit und/oder die Beschleunigung für eine Bewegung des Movers (200, 200') ausgeführt wird, und wobei die Magnetfelderzeuger (127) der Sektoren (501) entsprechend der Dynamikplanung mit Strom versorgt werden.

15. Steuereinheit (506), die ausgebildet ist, ein Verfahren gemäß einem der Ansprüche 8 bis 14 auszuführen.

## Claims

1. Device for driving at least one mover (200, 200') on a drive surface (510), the mover (200, 200') comprising at least one second magnetic field generator (250), the drive surface (510) having a number of plate-shaped sectors (501), the sectors (501) having magnetic field generators (127), the sectors (501) being connected to a control unit (506), the control unit (506) being designed to generate magnetic fields by way of corresponding control of a power supply of the magnetic field generators (127) of the sectors (501) in such a way that the mover (200, 200') is movable in at least one direction over the drive surface (510), the control unit (506) being designed to carry out path planning for the mover (200, 200') from a starting point (507, 507') to a target point (508, 508') and the control unit (506) being designed to activate the magnetic field generators (127) of the sectors (501) with current in such a way that the mover (200, 200') can be moved over the drive surface (510, 10) along the determined path (511, 511'), **characterized in that**
the control unit (506) is designed to use at least one graph (503, 519, 520) with nodes (505, 522, 524) and edges (504, 523, 521) for the path planning, the graph (503, 519, 520) having a greater density of edges (504, 521, 523) and/or a greater density of nodes (505, 522, 524) and/or a smaller average length of the edges (504, 521, 523) in a predetermined surrounding area (515) around the position of the mover (200, 200') than outside the surrounding area (515).

2. Device according to Claim 1, at least some of the edges (504, 521, 523) being assigned a weighting, and the control unit (506) taking the weighting into account in a path planning, the weighting of an edge (504, 521, 523) depending on the length of the edge (504, 521, 523) or on a maximum speed of the mover (200, 200') when travelling over the edge (504, 521, 523), and/or the weighting depending at least on the temperature of the sector (501), in particular on the temperature of at least one magnetic field generator (127) of the sector (501) .

3. Device according to either of the preceding claims, the control unit (506) carrying out the path planning repeatedly in predeterminable time cycles.

4. Device according to one of the preceding claims, the control unit (506) performing the path planning on two planning levels, a first path planning with at least one first graph (519) being performed on a first planning level and a first path (525) being determined, a second path planning with at least one second graph (520) being carried out on a second planning level and a second path (526) being determined, the first graph (519) having a smaller density of nodes (505, 522, 524) and/or edges (504, 521, 523) than the second graph (520), and the control unit (506) taking into account both path plannings for the path planning of the mover (200, 200').

5. Device according to Claim 4, the first graph (519) and the second graph (520) having at least one shared node (527), the shared node (527), which lies on the first path (525), being taken into account by the control unit (506) for the second path planning on the second planning level, and the control unit (506) using the shared node (527), which lies on the first path (525), as the target for the second path planning.

6. Device according to Claim 4 or 5, the control unit (506) calculating the first path planning in advance with respect to the second path planning, so that the control unit (506) can take into account shared nodes (527), which lie on the first path (525), for the second path planning.

7. Device according to one of the preceding claims, the control unit (506) being designed to perform dynamic planning for the acceleration and/or the speed of the mover (200, 200') on the basis of the planned path (511, 511') in order to activate correspondingly the magnetic field generators (127) of the sectors (101) necessary in accordance with the planned path (511, 511').

8. Method for driving at least one mover, the mover (200, 200') having at least one device (1, 501) for generating a magnetic field, in particular at least one magnet, the mover (200, 200') being movable on a drive surface (510) with a number of sectors (501), the sectors (501) having magnetic field generators (127) for generating at least one magnetic field and a path planning for the mover (200, 200') from a starting point (507, 507') to a target point (508, 508') on the drive surface (510) being performed,
**characterized in that**
the path planning uses at least one graph (503, 519, 520) with nodes (505, 522, 524) and edges (504, 523, 521), the graph (503, 519, 520) having a greater density of edges (504, 521, 523) and/or a greater density of nodes (505, 522, 524) and/or a smaller average length of the edges (504, 521, 523) in a predetermined surrounding area (515) around the position of the mover (200, 200') than outside the surrounding area (515).

9. Method according to Claim 8, at least some of the edges (504, 523, 521) being assigned a weighting, the weighting of the edge (504, 523, 521) indicating how advantageous the edge (504, 523, 521) is for the path planning, and the weighting being taken into account in the path planning, the weighting of an edge (504, 523, 521) depending on the length of the edge (504, 523, 521) or on a maximum possible speed of the mover (200, 200') when travelling over the edge (504, 523, 521), and/or the weighting of the edge (504, 523, 521) depending at least on a temperature of a sector (501) over which the edge (504, 523, 521) passes, the weighting depending in particular on a temperature of at least one magnetic field generator (127) of the sector (501).

10. Method according to Claim 8 or 9, the path planning being carried out repeatedly in predeterminable time cycles.

11. Method according to one of Claims 8 to 10, the path planning being performed on two planning levels, a first path planning with a first graph (519) being performed on a first planning level and a first path (525) being determined, a second path planning with a second graph (520) being carried out on a second planning level and a second path (526) being determined, the first graph (519) having a smaller density of nodes (505, 522, 524) and/or edges (504, 523, 521) and/or a smaller average length of the edges (504, 523, 521) than the second graph (520), and both path plannings being taken into account for the path planning of the mover.

12. Method according to Claim 11, the first graph (519) and the second graph (520) having at least one shared node (505, 522, 524), a shared node (505, 522, 524), which lies on the first path, being taken into account for the second path planning on the second planning level, and the shared node (505, 522, 524), which lies on the first path (519), being used as the target for the second path planning.

13. Method according to Claim 11 or 12, the first path planning being calculated in advance with respect to the second path planning, for the second path planning shared nodes (505, 522, 524), which lie on the determined first path (525), being taken into account in the second path planning.

14. Method according to one of Claims 8 to 13, dynamic planning for the speed and/or the acceleration for a movement of the mover (200, 200') being performed on the basis of the planned path (511, 511'), and the magnetic field generators (127) of the sectors (501) being supplied with current in accordance with the dynamic planning.

15. Control unit (506), which is designed to perform a method according to one of Claims 8 to 14.

## Revendications

1. Dispositif permettant d'entraîner au moins un élément de déplacement (200, 200') sur une surface d'entraînement (510), l'élément de déplacement (200, 200') présentant au moins un deuxième générateur de champ magnétique (250), la surface d'entraînement (510) présentant plusieurs secteurs (501) en forme de plaque, les secteurs (501) présentant des générateurs de champ magnétique (127), les secteurs (501) étant reliés à une unité de commande (506), l'unité de commande (506) étant réalisée pour générer par une commande adéquate d'une alimentation électrique des générateurs de champ magnétique (127) des secteurs (501) des champs magnétiques de telle sorte que l'élément de déplacement (200, 200') peut être déplacé au moins dans une direction sur la surface d'entraînement (510), l'unité de commande (506) étant réalisée pour effectuer une planification de trajectoire pour l'élément de déplacement (200, 200') d'un point de départ (507, 507') à un point de destination (508, 508'), l'unité de commande (506) étant réalisée pour piloter par électricité les générateurs de champ magnétique (127) des secteurs (501) de telle sorte que l'élément de déplacement (200, 200') peut être déplacé le long de la trajectoire déterminée (511, 511') sur la surface d'entraînement (510, 10),
**caractérisé en ce que** l'unité de commande (506) est réalisée pour utiliser pour la planification de trajectoire au moins un graphe (503, 519, 520) doté de nœuds (505, 522, 524) et d'arêtes (504, 523, 521), le graphe (503, 519, 520) présentant dans un environnement prédéfini (515) autour de la position de l'élément de déplacement (200, 200') une plus grande densité d'arêtes (504, 521, 523) et/ou une plus grande densité de nœuds (505, 522, 524) et/ou une plus petite longueur moyenne des arêtes (504, 521, 523) qu'à l'extérieur de l'environnement (515).

2. Dispositif selon la revendication 1, dans lequel une pondération est associée à au moins une partie des arêtes (504, 521, 523), et l'unité de commande (506) tient compte de la pondération pour une planification de trajectoire, dans lequel la pondération d'une arête (504, 521, 523) dépend de la longueur de l'arête (504, 521, 523) ou d'une vitesse maximale de l'élément de déplacement (200, 200') lors du déplacement sur l'arête (504, 521, 523), et/ou la pondération dépend au moins de la température du secteur (501), en particulier de la température d'au moins un générateur de champ magnétique (127) du secteur (501).

3. Dispositif selon l'une quelconque des revendications précédentes, dans lequel l'unité de commande (506) effectue la planification de trajectoire à plusieurs reprises dans des cycles de temps prédéfinissables.

4. Dispositif selon l'une quelconque des revendications précédentes, dans lequel l'unité de commande (506) effectue la planification de trajectoire sur deux niveaux de planification, dans lequel, sur un premier niveau de planification, une première planification de trajectoire est effectuée avec au moins un premier graphe (519) et une première trajectoire (525) est déterminée, dans lequel, sur un deuxième niveau de planification, une deuxième planification de trajectoire est effectuée avec au moins un deuxième graphe (520) et une deuxième trajectoire (526) est déterminée, le premier graphe (519) présentant une plus petite densité de nœuds (505, 522, 524) et/ou d'arêtes (504, 521, 523) que le deuxième graphe (520), et l'unité de commande (506) tenant compte des deux planifications de trajectoire pour la planification de trajectoire de l'élément de déplacement (200, 200').

5. Dispositif selon la revendication 4, dans lequel le premier graphe (519) et le deuxième graphe (520) présentent au moins un nœud commun (527), l'unité de commande (506) tenant compte, pour la deuxième planification de trajectoire sur le deuxième niveau de planification, du nœud commun (527) qui se trouve sur la première trajectoire (525), et l'unité de commande (506) utilisant le nœud commun (527) qui se trouve sur la première trajectoire (525) comme cible pour la deuxième planification de trajectoire.

6. Dispositif selon la revendication 4 ou 5, dans lequel l'unité de commande (506) calcule la première planification de trajectoire à l'avance par rapport à la deuxième planification de trajectoire de sorte que l'unité de commande (506) peut tenir compte, pour la deuxième planification de trajectoire, de nœuds communs (527) qui se trouvent sur la première trajectoire (525).

7. Dispositif selon l'une quelconque des revendications précédentes, dans lequel l'unité de commande (506) est réalisée pour effectuer sur la base de la trajectoire planifiée (511, 511') une planification dynamique pour l'accélération et/ou la vitesse de l'élément de déplacement (200, 200') afin de piloter de façon adéquate les générateurs de champ magnétique (127) des secteurs (101), nécessaires selon la trajectoire planifiée (511, 511').

8. Procédé permettant d'entraîner au moins un élément de déplacement, l'élément de déplacement (200, 200') présentant au moins un dispositif (1, 501) permettant de générer un champ magnétique, en particulier au moins un aimant, l'élément de déplacement (200, 200') pouvant être déplacé sur une surface d'entraînement (510) dotée de plusieurs secteurs (501), les secteurs (501) présentant des générateurs de champ magnétique (127) pour générer au moins un champ magnétique, une planification de trajectoire étant effectuée pour l'élément de déplacement (200, 200') d'un point de départ (507, 507') à un point de destination (508, 508') sur la surface d'entraînement (510),
**caractérisé en ce qu'**au moins un graphe (503, 519, 520) doté de nœuds (505, 522, 524) et d'arêtes (504, 523, 521) est utilisé pour la planification de trajectoire, le graphe (503, 519, 520) présentant dans un environnement prédéfini (515) autour de la position de l'élément de déplacement (200, 200') une plus grande densité d'arêtes (504, 521, 523) et/ou une plus grande densité de nœuds (505, 522, 524) et/ou une plus petite longueur moyenne des arêtes (504, 521, 523) qu'à l'extérieur de l'environnement (515).

9. Procédé selon la revendication 8, dans lequel une pondération est associée à au moins une partie des arêtes (504, 523, 521), la pondération de l'arête (504, 523, 521) indiquant à quel point l'arête (504, 523, 521) est avantageuse pour la planification de trajectoire, et la pondération étant prise en compte lors d'une planification de trajectoire, la pondération de l'arête (504, 523, 521) dépendant de la longueur de l'arête (504, 523, 521) ou d'une vitesse maximale possible de l'élément de déplacement (200, 200') lors du déplacement sur l'arête (504, 523, 521), et/ou la pondération de l'arête (504, 523, 521) dépendant d'au moins une température d'un secteur (501) par lequel passe l'arête (504, 523, 521), la pondération dépendant en particulier d'une température d'au moins un générateur de champ magnétique (127) du secteur (501).

10. Procédé selon la revendication 8 ou 9, dans lequel la planification de trajectoire est effectuée à plusieurs reprises dans des cycles de temps prédéfinissables.

11. Procédé selon l'une quelconque des revendications 8 à 10, dans lequel la planification de trajectoire est effectuée sur deux niveaux de planification, dans lequel, sur un premier niveau de planification, une première planification de trajectoire est effectuée avec un premier graphe (519) et une première trajectoire (525) est déterminée, dans lequel, sur un deuxième niveau de planification, une deuxième planification de trajectoire est effectuée avec un deuxième graphe (520) et une deuxième trajectoire (526) est déterminée, le premier graphe (519) présentant une plus petite densité de nœuds (505, 522, 524) et/ou d'arêtes (504, 523, 521) et/ou une plus petite longueur moyenne des arêtes (504, 523, 521) que le deuxième graphe (520), et les deux planifications de trajectoire étant prises en compte pour la planification de trajectoire de l'élément de déplacement.

12. Procédé selon la revendication 11, dans lequel le premier graphe (519) et le deuxième graphe (520) présentent au moins un nœud commun (505, 522, 524), dans lequel, pour la deuxième planification de trajectoire sur le deuxième niveau de planification, un nœud commun (505, 522, 524) qui se trouve sur la première trajectoire est pris en compte, et le nœud commun (505, 522, 524) qui se trouve sur la première trajectoire (519) est utilisé comme cible pour la deuxième planification de trajectoire.

13. Procédé selon la revendication 11 ou 12, dans lequel la première planification de trajectoire est calculée à l'avance par rapport à la deuxième planification de trajectoire, dans lequel, pour la deuxième planification de trajectoire, des nœuds communs (505, 522, 524) qui se trouvent sur la première trajectoire déterminée (525) sont pris en compte lors de la deuxième planification de trajectoire.

14. Procédé selon l'une quelconque des revendications 8 à 13, dans lequel, sur la base de la trajectoire planifiée (511, 511'), une planification dynamique est effectuée pour la vitesse et/ou l'accélération pour un déplacement de l'élément de déplacement (200, 200'), et les générateurs de champ magnétique (127) des secteurs (501) sont alimentés en électricité selon la planification dynamique.

15. Unité de commande (506) qui est réalisée pour exécuter un procédé selon l'une quelconque des revendications 8 à 14.
